Europäisches Patentamt

European Patent Office

Office européen des brevets

(19)

(11) Numéro de publication: **0 235 009**
**B1**

(12) # FASCICULE DE BREVET EUROPEEN

(45) Date de publication du fascicule du brevet:
**20.12.89**

(51) Int. Cl.⁴: **F 17 C 5/00**, G 05 D 17/02

(21) Numéro de dépôt: **87400232.2**

(22) Date de dépôt: **02.02.87**

(54) Procédé et machine de contrôle de l'état bloqué et/ou serré d'un organe fileté rotatif.

(30) Priorité: **03.02.86 FR 8601459**

(43) Date de publication de la demande:
**02.09.87 Bulletin 87/36**

(45) Mention de la délivrance du brevet:
**20.12.89 Bulletin 89/51**

(84) Etats contractants désignés:
**AT BE CH DE ES FR GB GR IT LI LU NL SE**

(56) Documents cités:
**FR-A- 2 129 150**
**FR-A- 2 147 351**
**FR-A- 2 223 624**
**FR-A- 2 469 648**
**FR-A- 2 535 482**

**Le dossier contient des informations techniques présentées postérieurement au dépôt de la demande et ne figurant pas dans le présent fascicule.**

(73) Titulaire: **ELF ANTARGAZ, 4, rue Léon Jost B.P. 582, F-75828 Paris Cedex 17 (FR)**

(72) Inventeur: **Turinetto, Jean-François, 3 rue du Maréchal Ney Epinay-Sous-Senart, F-91800 Brunoy (FR)**
Inventeur: **Aubry, Jean-Philippe, 22 rue Brochant, F-75017 Paris (FR)**
Inventeur: **Benedico, Gérard, 21-72 Avenue d'Orgemont, F-92700 Colombes (FR)**
Inventeur: **Brisset, Joel, 108 Avenue Foch Bâtiment La Pelouse, F-77500 Chelles (FR)**
Inventeur: **Evin, Christian, 4 rue Charles Peguy, F-77500 Chelles (FR)**

(74) Mandataire: **Phélip, Bruno et al, c/o Cabinet Harlé & Phélip 21, rue de La Rochefoucauld, F-75009 Paris (FR)**

ACTORUM AG

## Description

La présente invention concerne un procédé et une machine de contrôle de l'état bloqué et/ou serré d'un organe fileté, monté en rotation sur un support, et en particulier, d'un organe fileté mobile, par vissage et dévissage, entre deux positions extrêmes, dont l'une est une position de fermeture et l'autre une position d'ouverture, qui correspondent respectivement à l'état vissé et à l'état dévissé de l'organe fileté, comme cela est le cas notamment des volants de robinet et des capuchons des bouteilles de gaz de pétrole liquéfié (GPL).

Plus précisément, l'invention se rapporte à un procédé et à une machine destinés à permettre notamment:

1) de contrôler l'état bloqué ou non des volants filetés des robinets ou des capuchons filetés équipant les bouteilles de conditionnement de butane et propane, c'est-à-dire de contrôler la manoeuvrabilité de ces volants de robinets ou de ces capuchons,

2) de commander la fermeture par vissage des volants de robinets ou des capuchons, immédiatement après avoir contrôlé que ces volants ou ces capuchons ne sont pas bloqués ou, dans le cas contraire, après avoir commandé une tentative de déblocage par dévissage des volants ou capuchons qui s'est avérée concluante,

3) d'éliminer, après contrôle et éventuellement, tentative de déblocage infructueuse, les bouteilles dont le capuchon ou le volant du robinet est resté bloqué, est difficile à fermer ou est fou en rotation sur la bouteille.

D'une manière générale, le procédé et la machine selon l'invention sont destinés, d'une part, à permettre l'élimination, sur une chaîne de conditionnement de GPL en bouteilles, de toutes les bouteilles équipées d'un robinet et/ou d'un capuchon n'offrant pas le maximum de sécurité, en conformité avec les règlementations les plus récentes relatives à l'amélioration de la sécurité, et, d'autre part, à améliorer la productivité du traitement des bouteilles de GPL en fin de chaîne de conditionnement.

Dans la suite du présent mémoire descriptif, on se limitera uniquement, à titre d'exemple, au cadre de l'application du procédé et de la machine selon l'invention au contrôle de la fermeture des volants de robinets des bouteilles de GPL, afin de ne pas allonger exagérément la description. Cependant, il doit être bien compris que l'homme du métier ne rencontrera aucune difficulté à transposer le procédé et la machine selon l'invention à d'autres applications, telles que le contrôle de la fermeture des capuchons des bouteilles de GPL, ou encore d'autres organes filetés rotatifs.

On sait que les volants filetés de robinets peuvent se bloquer en position de fermeture complète, en position d'ouverture totale, ou entre ces deux positions.

Si une bouteille dont le robinet est bloqué en position d'ouverture totale parvenait chez un utilisateur, l'enlèvement par ce dernier du bouchon du robinet provoquerait immédiatement une fuite de gaz pouvant être à l'origine d'un accident.

Pour éliminer cette éventualité, notamment, toute bouteille remplie en usine de GPL subit une série de vérifications et d'opérations, dont celle qui consiste à contrôler la fermeture du volant du robinet. En effet, sur une chaîne de conditionnement de GPL en bouteilles, lorsqu'une bouteille quitte le poste de remplissage, son robinet est fermé et un bouchon ou une capsule d'étanchéité est posé(e) sur l'orifice de sortie du robinet. Puis, le robinet est ouvert et l'étanchéité est vérifiée par une machine de détection des fuites, à la suite de laquelle il est nécessaire de revisser le volant du bouchon d'une bouteille contrôlée sans fuite. Ce contrôle de fermeture intervient donc en fin de chaîne, juste avant la pose du capuchon sur la bouteille, et la machine faisant l'objet de l'invention est notamment destinée à la mise en oeuvre d'un procédé selon l'invention pour effectuer ce contrôle et revisser les volants de robinets avec de préférence un couple constant, jusqu'en position normale de fermeture.

Dans l'état de la technique, on connaît déjà une machine de fermeture des volants de robinets de bouteille de gaz qui comprend un cône de friction, qui est translaté axialement jusqu'à venir en contact avec un volant de robinet, puis est entraîné en rotation autour de son axe afin d'entraîner par frottement le volant dans le sens du vissage, c'est-à-dire de la fermeture.

Cette machine a pour inconvénient de présenter un manque de fiabilité car l'entraînement en rotation du volant de robinet par le cône de friction s'accompagne d'un glissement qui dépend de nombreux paramètres. Des plus, cette machine connue ne permet pas de traiter de la même manière des volants de robinet présentant des formes différentes, notamment des volants cylindriques, des volants carrés ou en forme d'étoile.

Le brevet français 2 535 482 a pour objet un dispositif de vissage des volants de robinets de bouteilles de gaz, ce dispositif comportant des moyens de contrôle de l'état bloqué et/ou serré du volant. Dans ce dispositif, le vissage est réalisé au moyen d'une cloche de manoeuvre susceptible de venir coiffer le volant du robinet et de l'entraîner en rotation. De plus, des moyens de mesure du déplacement angulaire de la cloche, formés d'une roue codeuse solidaire en rotation de la cloche et coopérant avec des moyens de comptage des impulsions délivrées par cette roue, à savoir un capteur inductif, permettent de détecter la rotation du volant. En outre, le dispositif comporte des moyens permettant de délivrer un signal d'interruption du vissage lorsque l'amplitude du déplacement angulaire devient supérieure à un seuil haut prédéterminé, et le dispositif comporte en outre des moyens permettant de délivrer un signal d'invalidation, commandant le rejet de la bouteille, lorsque l'amplitude finale du déplacement angulaire est inférieure à un seuil bas prédéterminé.

Il convient en particulier de noter que la description, dans le document précité, de moyens de détection de la présence d'une bouteille au poste de contrôle n'est ni une description ni une suggestion de l'installation d'autres moyens de détection, pour détecter la présence d'un volant de robinet sur une bouteille dont la présence a effectivement été détectée au poste de contrôle, à moins d'admettre qu'il était évident, pour un homme de métier, de ne lancer un procédé de contrôle de l'état bloqué et/ou serré d'un volant de robinet monté en rotation sur une bouteille, qu'à partir du moment où l'on a bien la certitude de la présence d'un tel volant sur une telle bouteille.

Ainsi, les caractéristiques de la revendication principale de procédé de la présente invention, relatives à un cycle «amélioré», ne sont ni décrites ni suggérées dans le FR-A-2 535 482, et permettent, lorsqu'elles sont appliquées à une bouteille qui serait rejetée, selon les enseignements du FR-A-2 535 482, d'éviter la mise au rebut, après déblocage du volant, obtenu grâce précisément à la mise en oeuvre de ces caractéristiques supplémentaires et particulières.

La demanderesse a constaté que certaines des caractéristiques du procédé selon le cycle amélioré de la demande sont décrites ou suggérées dans le brevet français 2 129 150, et en particulier l'inversion du sens de rotation, pour passer d'un vissage bloqué à un dévissage, avec un couple de dévissage supérieur (le double) au couple de vissage. Mais ce brevet français 2 129 150 a pour objet une installation pour l'enlèvement et la mise en place des chapeaux de protection et de transport de bouteilles de gaz, afin d'obtenir des bouteilles dont le robinet est protégé par un chapeau vissé mais non bloqué. De plus, rien dans ce brevet français ne décrit ni ne suggère le passage à nouveau en configuration de revissage, selon le cycle amélioré de la demande, de sorte qu'en supposant que le procédé décrit dans le brevet français 2 129 150 puisse être appliqué non pas au chapeau de protection mais au volant des robinets, on obtiendra des bouteilles avec un volant serré et non bloqué, mais sans discrimination des bouteilles dont les volants sont montés fous en rotation ou bloqués comme cela est le cas du brevet français 2 535 482.

Par conséquent, on peut également conclure que la combinaison des brevets français 2 535 482 et 2 129 150 n'est pas opposable à la revendication principale de procédé, d'autant plus que ces deux documents n'ont pas exactement le même objet et que l'homme du métier n'est donc pas directement incité à appliquer les enseignements tirés de l'un de ces documents à un dispositif ou à un procédé décrit dans l'autre. De toute façon, la somme des enseignements de ces documents ne suffit pas à reproduire un procédé conforme à la revendication 8 de procédé.

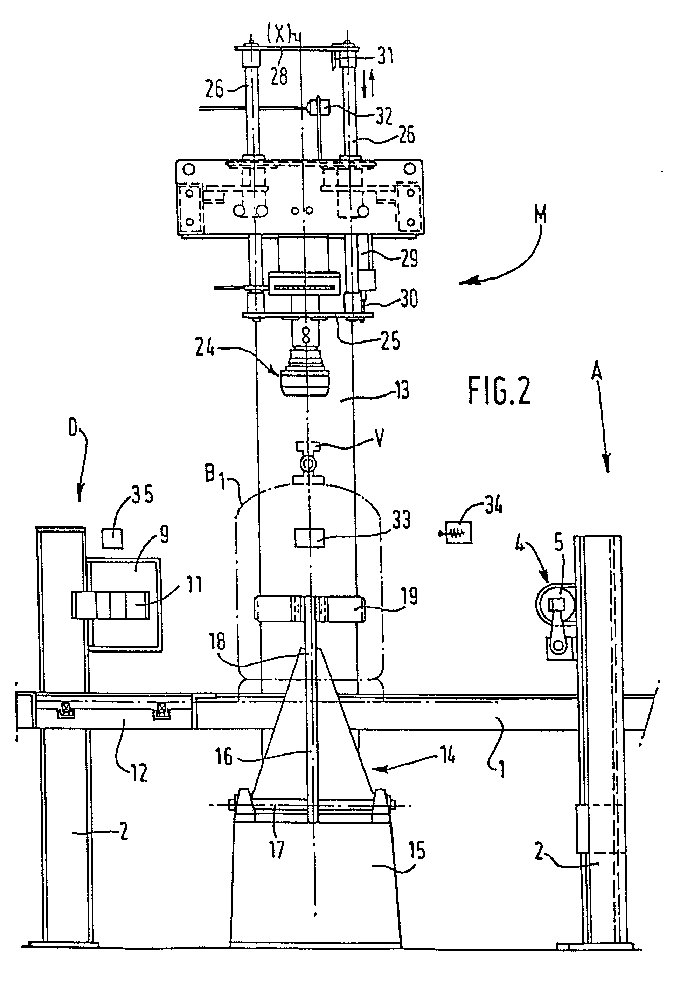

Par ailleurs, le FR-A-2 535 482 ne décrit pas toutes les caractéristiques de la revendication principale de la machine. Toutefois, le brevet français 2 223 624 a en commun avec la présente demande d'avoir pour objet un dispositif ou une machine automatique pour l'ouverture ou la fermeture des robinets des bouteilles de gaz, cette machine assurant la détection de la présence ce du volant puis, si ce dernier est présent, l'entraînement en rotation par blocage pneumatique d'une membrane déformable autour du volant. Dans ce brevet, la détection de la présence du volant est une détection pneumatique, par l'obturation par le volant 21 (voir figure 2) de l'orifice 13 à l'extrémité inférieure du canal 10 d'alimentation pneumatique d'un tiroir de distribution 16 commandant l'alimentation de la chambre 6 délimitée entre la membrane souple 5 et la paroi périphérique tubulaire 7 de la tête d'entraînement du volant du robinet. Dans ce brevet, la détection de la présence du volant commande donc le gonflage de la membrane autour du volant qui peut ensuite être vissé ou dévissé. Par contre, à la libération du volant par la membrane 5, rien dans ce brevet ne décrit ni ne suggère la mise en communication de la chambre 6 avec une source de dépression, de sorte que ce document n'est pas opposable, en combinaison avec le brevet français 2 535 482, à l'encontre de la revendication principale de machine.

Conformément à l'invention, le rappel en position de repos de la membrane par aspiration permet d'augmenter considérablement le nombre de manoeuvres exécutables avec la même membrane.

On notera finalement que l'entraînement par cloche de manoeuvre selon le FR-A-2 535 482 risque d'être un entraînement qui ne soit pas positif, le nombre de tours de la cloche ne correspondant pas dans ce cas au nombre de tours du robinet de la bouteille.

Par l'invention, on se propose de remédier aux inconvénients des et/ou de perfectionner les dispositifs connus, et à cet effet, le procédé selon l'invention, pour le contrôle de l'état bloqué et/ou serré d'un organe fileté, tel qu'un volant de robinet, monté en rotation sur un support, telle qu'une bouteille de gaz, et mobile par vissage et dévissage entre deux positions extrêmes, dont l'une est une position de fermeture et l'autre une position d'ouverture, qui correspondent respectivement à l'état vissé et à l'état dévissé de l'organe fileté consiste à:

— à solidariser sensiblement positivement en rotation l'organe fileté et un organe d'entraînement en rotation de l'organe fileté autour de son axe,

— à commander l'application d'un couple de vissage sur l'organe d'entraînement,

— à détecter la rotation effective de l'organe d'entraînement, et

si la rotation détectée est supérieure à un premier seuil angulaire prédéterminé, à maintenir l'application d'un couple de vissage afin de poursuivre l'entraînement en rotation de l'organe fileté dans le même sens, puis à l'interrompre,

soit à la détection d'une vitesse de rotation nulle, si cette détection est obtenue avant d'atteindre un second seuil angulaire prédéterminé, très supérieur au premier et de préférence, à la course angulaire maximale entre les deux positions extrêmes de l'organe fileté, ce qui témoigne de ce que l'organe fileté est serré en position vissée,

soit à la détection du second seuil angulaire, ce qui témoigne de ce que l'organe fileté est fou en rotation sur un support, et à commander en conséquence la mise au rebut du support et de son organe fileté, tandis que:

si la rotation détectée est inférieure au premier seuil angulaire, on considère que l'organe fileté est bloqué, et le procédé consiste à interrompre l'application du couple de vissage et, selon un cycle simplifié, à commander la mise au rebut du support et de son organe fileté, ce qui intervient après désolidarisation et écartement de l'organe d'entraînement de l'organe fileté et,

est caractérisé en ce qu'il consiste initialement à contrôler par contact la présence d'un organe fileté sur un support, puis, si le contrôle de la présence de l'organe fileté est positif, à exécuter les opérations précédentes, tandis que si le contrôle de la présence de l'organe fileté est négatif, le procédé consiste à commander directement la mise au rebut du support, et en ce qu'il consiste de plus, après la détection d'une rotation inférieure au premier seuil angulaire entraînant l'interruption de l'application d'un couple de vissage,

— à commander l'application sur l'organe d'entraînement d'un couple de dévissage, supérieur au couple de vissage,

— à détecter la rotation effective de l'organe d'entraînement dans le sens du dévissage; et,

— si la rotation détectée dans ce sens est inférieure à un troisième seuil angulaire prédéterminé, de valeur voisine ou, de préférence égale à celle du premier, ce qui témoigne du blocage de l'organe fileté sur son support, à interrompre l'application du couple de dévissage et à commander la mise au rebut du support et de son organe fileté, alors que,

— si la rotation détectée dans ce sens est supérieure au troisième seuil angulaire, le procédé consiste en outre,

— à interrompre l'application du couple de dévissage sur l'organe d'entraînement et à lui appliquer à nouveau un couple de vissage, puis à détecter la rotation effective de l'organe d'entraînement dans le sens du vissage et,

— si la rotation détectée dans ce sens est inférieure au premier seuil angulaire, à commander la mise au rebut du support et de son organe fileté, alors que

— si la rotation détectée dans le sens du vissage est supérieure au premier seuil, le procédé consiste enfin à maintenir le couple de vissage jusqu'à la détection d'une vitesse de rotation nulle, ce qui témoigne de ce que l'organe fileté est serré en position vissée.

Avantageusement, afin de permettre la fermeture de l'organe fileté avec une force de serrage contrôlée et prédéterminée, telle qu'un utilisateur, même âgé, puisse le desserrer manuellement, tout en ayant les meilleures chances de débloquer un robinet par l'application d'un couple de dévissage suffisant, le procédé de contrôle selon l'invention consiste également à appliquer un couple de vissage et éventuellement, un couple de dévissage qui est constant, le couple de dévissage étant de préférence au moins égal au double du couple de vissage. Ainsi, le choix de la valeur du couple de vissage permet aux utilisateurs même âgés de desserrer l'organe fileté, à partir de sa position de fermeture, tandis que la valeur très supérieure du couple de dévissage garantit, dans la plupart des cas de blocage de l'organe fileté, un déblocage efficace après une tentative infructueuse de vissage, et suivi à son tour d'une nouvelle tentative de vissage devant permettre, dans de nombreux cas, d'amener l'organe fileté à l'état vissé et serré en position normale de fermeture.

Dans une variante dont la mise en oeuvre est préférée, le procédé consiste également à solidariser en rotation l'organe fileté et l'organe d'entraînement par déformation sous pression, de préférence réglable, d'un élément déformable de l'organe d'entraînement qui est appliqué et serré autour d'au moins une partie de l'organe fileté, et à désolidariser l'organe fileté de l'organe d'entraînement par retour élastique en configuration non déformée de l'élément déformable de l'organe d'entraînement. Avantageusement cependant, afin de se prémunir contre la perte des caractéristiques de retour élastique de l'élément déformable de l'organe d'entraînement, le procédé peut également consister à désolidariser l'organe fileté de l'organe d'entraînement avec l'assistance d'une dépression rappelant l'élément déformable jusqu'à sa configuration non déformée.

Dans une variante avantageuse au plan de la simplicité de la structure et de la fiabilité de cette structure de mise en oeuvre du procédé, ce dernier consiste de plus à détecter la rotation et la vitesse de rotation de l'organe d'entraînement par scrutation et comptage d'impulsion produites en nombre proportionnel à la rotation effective de l'organe d'entraînement.

Dans ce dernier cas, et dans un mode de réalisation dont la mise en oeuvre est préférée, le procédé consiste, en début de cycle:

— à déclencher une première temporisation en même temps que le couple de vissage initial est appliqué,

— à détecter d'éventuelles impulsions témoignant de la mise en rotation de l'organe d'entraînement, puis, à la fin de cette première temporisation,

— à enregistrer s'il y a ou non comptage d'impulsions, c'est-à-dire s'il y a ou non rotation, et parallèlement et indépendamment de la présence ou non d'une rotation,

— à prendre en compte des nombres d'impulsions de consigne correspondants chacun à l'un des seuils prédéterminés de rotation angulaire,

— à maintenir l'application du couple de vissage et,

— à déclencher une seconde temporisation, au cours de laquelle on enregistre s'il y a comptage d'impulsion et on compare le résultat du comptage aux nombres de consignes, et

— si le nombre d'impulsions comptées est compris entre les nombres de consigne des premier et second seuils, à maintenir l'application du couple de vissage, même après la fin de la seconde temporisation, et à scruter l'apparition d'impulsions pendant de courts intervalles de temps successifs afin de mesurer la vitesse de rotation tout en comparant en permanence le nombre d'impulsions émises au nombre de consigne du second seuil, puis à commander la mise au rebut du support et de son organe fileté si le nombre de consigne du second seuil est atteint, et à détecter l'état serré et vissé de l'organe fileté en l'absence d'impulsions pendant un intervalle de scrutation, témoignant d'une vitesse nulle de rotation, tandis que

— si le nombre d'impulsions comptées est supérieur au nombre de consigne de second seuil, le procédé consiste à commander la mise au rebut du support et de son organe fileté, et que

— si le nombre d'impulsions comptées est inférieur au nombre de consigne du premier seuil, le procédé consiste, selon le cycle simplifié, à commander également la mise au rebut du support et de son organe fileté.

Cependant, et avantageusement, selon le cycle amélioré et si le nombre d'impulsions comptées est inférieur au nombre de consigne du premier seuil, à la fin de la seconde temporisation, le procédé consiste de plus:

— à enregistrer cet état,

— à appliquer le couple de dévissage et à supprimer le couple de vissage,

— à déclencher une troisième temporisation au cours de laquelle on enregistre le nombre d'impulsions reçues et on compare ce nombre au nombre de consigne du troisième seuil, de préférence égal à celui du premier seuil, puis

— à commander la mise au rebut du support et de son organe fileté, si le nombre d'impulsions comptées au dévissage est inférieur au nombre de consigne du troisième seuil à la fin de la troisième temporisation, tandis que si le nombre d'impulsions comptées au dévissage est supérieur au nombre de consigne du troisième seuil, avant la fin de la troisième temporisation, le procédé consiste de plus:

— à supprimer le couple de dévissage et à appliquer à nouveau le couple de vissage,

— à détecter l'instant du renversement du sens de rotation, et

— à déclencher à partir de cet instant, une quatrième temporisation égale à la seconde, au cours de laquelle on enregistre les impulsions reçues, et à la fin de laquelle, on compare le nombre d'impulsions comptées au revissage aux nombres de consigne des premier et second seuils pour supprimer le couple de revissage et commander la mise au rebut du support et de son organe fileté si ce nombre d'impulsions au revissage est inférieur au nombre de consigne du premier seuil, tandis que si ce nombre d'impulsions au revissage est compris entre les nombres de consigne des premier et second seuils, on maintient le couple de revissage et on scrute à nouveau les impulsions pendant de courts intervalles de temps successifs, et

— à détecter l'état serré et vissé de l'organe fileté en l'absence d'impulsions pendant un intervalle de scrutation, avant que le nombre d'impulsions comptées au revissage n'atteigne le nombre de consigne du second seuil, alors que l'on commande la suppression du couple de revissage et la mise au rebut du support et de son organe fileté, si le nombre d'impulsions comptées au revissage atteint le nombre de consigne du second seuil.

De plus, afin de détecter l'instant du renversement du sens de rotation entre le dévissage et le vissage, le procédé selon l'invention consiste avantageusement, à commander en même temps que l'application du couple de revissage, une scrutation des impulsions reçues pendant de brefs intervalles de temps successifs, et à considérer que l'instant du renversement du sens de rotation est atteint dès que le nombre d'impulsions comptées pendant un bref intervalle de temps est inférieur à un quatrième nombre de consigne, inférieur au premier et au troisième.

L'invention a également pour objet une machine destinée à la mise en oeuvre du procédé selon l'invention tel que présenté ci-dessus, cette machine comprenant:

— un bâti

— un dispositif de blocage et centrage de support d'organe fileté, qui est associé au bâti afin de bloquer tout support de manière à positionner l'organe fileté équipant éventuellement le support dans une position axiale prédéterminée par rapport au bâti,

— une tête de contrôle montée mobile en translation axiale sur le bâti,

— un dispositif de liaison universelle permettant une solidarisation amovible de la tête de contrôle audit organe fileté,

— un organe moteur d'entraînement, qui entraîne ledit organe fileté par l'intermédiaire du dispositif de liaison universelle autour de l'axe dudit organe fileté,

— un dispositif de détection de la rotation et de la vitesse de rotation dudit organe fileté, ledit dispositif de détection étant lié audit dispositif de liaison universelle, et

— un organe moteur de manoeuvre de la tête de contrôle sur le bâti,

caractérisée en ce que ladite tête de contrôle comporte un dispositif de détection de la présence d'un organe fileté sur un support bloqué dans le dispositif de blocage et de centrage,

et en ce que ledit dispositif de liaison universelle comprend un mors à membrane déformable comportant un embout tubulaire d'engagement sur l'organe fileté, et une membrane déformable, retenue dans l'embout et délimitant avec ce dernier une chambre à volume variable mise sélectivement en communication avec une source d'air comprimé afin d'appliquer et de serrer la membrane autour de la partie de l'organe fileté qui est engagée dans l'embout tubulaire lorsque la tête de contrôle a été translatée vers le support

— une tête de contrôle montée mobile en translation axiale sur le bâti,

— un dispositif de liaison universelle permettant une solidarisation amovible de la tête de contrôle audit organe fileté,

— un organe moteur d'entraînement, qui entraîne ledit organe fileté par l'intermédiaire du dispositif de liaison universelle autour de l'axe dudit organe fileté,

— Un dispositif de détection de la rotation et de la vitesse de rotation dudit organe fileté, ledit dispositif de détection étant lié audit dispositif de liaison universelle, et

— un organe moteur de manoeuvre de la tête de contrôle sur le bâti, caractérisée en ce que ladite tête de contrôle comporte un dispositif de détection de la présence d'un organe fileté sur un support bloqué dans le dispositif de blocage et de centrage,

et en ce que ledit dispositif de liaison universelle comprend un mors à membrane déformable comportant un embout tubulaire d'engagement sur l'organe fileté, et une membrane déformable retenue dans l'embout et délimitant avec ce dernier une chambre à volume variable mise sélectivement en communication avec une source d'air comprimé afin d'appliquer et de serrer la membrane autour de la partie de l'organe fileté qui est engagée dans l'embout tubulaire lorsque la tête de contrôle a été translatée vers le support de l'organe fileté, ladite chambre à volume variable étant mise sélectivement en communication avec une source de dépression afin de rappeler par aspiration la membrane déformable dans une position de libération de l'organe fileté.

Dans un mode de réalisation avantageux, l'organe moteur d'entraînement en rotation est une turbine pneumatique réversible, alimentée sélectivement en air comprimé à deux niveaux de pression réglables par au moins un distributeur de puissance commandé par deux électrovannes, dont l'une commande la rotation de la turbine dans le sens du vissage de l'organe fileté, avec un premier niveau de pression d'alimentation, et dont l'autre commande la rotation de la turbine dans le sens du dévissage avec un second niveau de pression, qui est supérieur au premier.

De plus, le dispositif de détection de la rotation et de la vitesse de rotation comprend, dans un mode de réalisation avantageux sur le plan de la simplicité et de la fiabilité de la structure, un générateur d'impulsions comportant une roue dentée solidaire en rotation du dispositif de liaison universelle, et un capteur inductif monté en regard de la roue dentée sur un élément non rotatif de la tête de contrôle.

En outre, le dispositif de détection de la présence d'un organe fileté sur un support comprend de préférence un palpeur escamotable, monté coulissant axialement, avec une course limitée, sur la tête de contrôle, et rappelé élastiquement dans une position de palpage dans laquelle il est en saillie vers le support par rapport au dispositif de liaison universelle, afin de venir le premier au contact de l'organe fileté dont ce support est éventuellement équipé, lorsque la tête de contrôle est déplacée vers le support, et d'être repoussé à l'encontre des moyens élastiques de rappel par l'organe fileté, afin de ne pas gêner la coopération de ce dernier avec le dispositif de liaison universelle. Dans cette forme de réalisation, et lorsque le dispositif de liaison universelle comprend un mors à membrane déformable, il est alors avantageux que le palpeur escamotable soit monté coulissant dans un passage axial traversant le fond de l'embout tubulaire et une cale de retenue d'un bord de la membrane déformable contre le fond, le palpeur présentant une extrémité qui, en position de palpage, fait saillie par rapport à la cale dans l'embout tubulaire, tandis que, par son extrémité opposée, le palpeur est solidaire en translation axiale d'une collerette d'actionnement d'un détecteur de position, monté sur une pièce non rotative de la tête de contrôle, de sorte que l'actionnement du détecteur de position par la translation du palpeur témoigne de la présence d'un organe fileté dans l'embout tubulaire.

Avantageusement, afin de faciliter le pilotage du fonctionnement de la machine, celle-ci comprend de plus un détecteur de début du cycle de fonctionnement, ce détecteur comportant un organe d'occultation et un capteur inductif, disposés l'un sur le bâti de la machine et l'autre sur la tête de contrôle, de sorte que le capteur soit occulté par l'organe d'occultation et émette un signal de début de cycle lorsque la tête de contrôle est déplacée vers le dispositif de blocage et centrage des supports.

Par ailleurs, du fait de sa structure et en raison de la nature du procédé qu'elle est destinée à mettre en oeuvre, la machine selon l'invention comprend avantageusement un automate programmable à microprocesseur, qui reçoit des signaux du dispositif de détection de la rotation et de la vitesse de rotation et du détecteur de début de cycle, et qui commande le fonctionnement de l'organe moteur d'entraînement en rotation, ainsi qu'au moins un séquenceur, qui est commandé par des détecteurs de position et commande lui-même le fonctionnement du dispositif de blocage et centrage des supports, de l'organe moteur de la tête de contrôle sur le bâti, et du dispositif de liaison universelle.

D'autres caractéristiques et avantages de l'invention ressortiront de la description donnée ci-dessous, à titre non limitatif, d'un exemple de réalisation d'une machine de contrôle de la fermeture des robinets de bouteille de GPL, en référence aux dessins annexés, dans lesquels:

— la Fig. 1 est une vue schématique en élévation latérale de la machine,

— les Fig. 2 et 3 sont des vues schématiques, respectivement en élévation de face et en plan, d'une portion d'une chaîne de remplissage de bouteilles de GPL qui comporte la machine de la Fig. 1,

— la Fig. 4 est une vue essentiellement en coupe verticale et à échelle agrandie, de la tête de contrôle équipant la machine de la Fig. 1,

— la Fig. 5 est une vue en coupe transversale selon V-V de la Fig. 4,

— la Fig. 6 est un schéma partiel de l'installation de commande de la machine de la Fig. 1, et

— les figures 7a et 7b sont les deux parties complémentaires d'un logigramme représentant les fonctions successivement remplies au cours des différents cycles de fonctionnement de la machine de la Fig. 1.

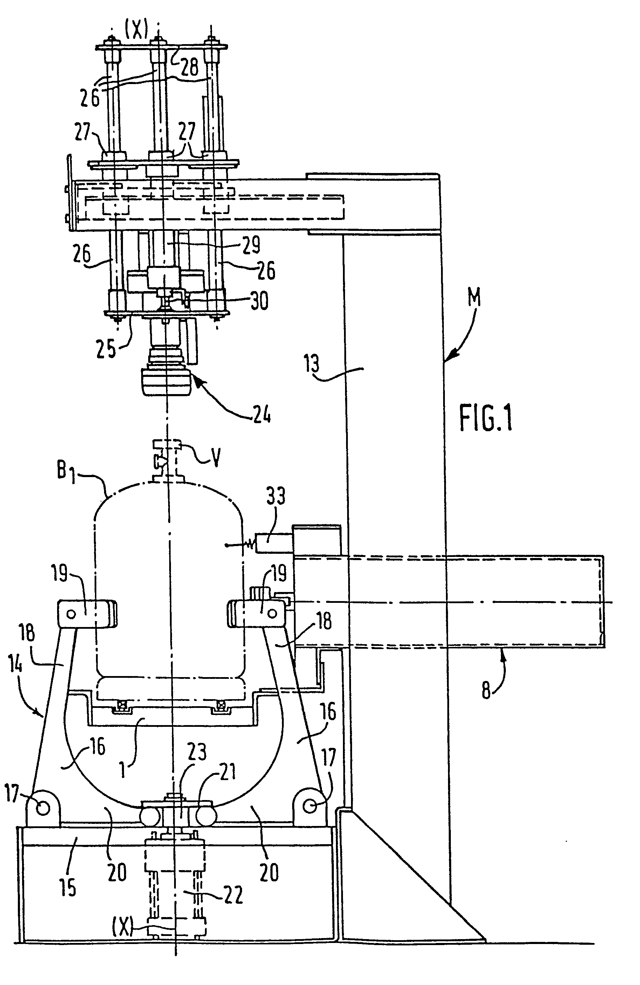

La machine M représentée sur la Fig. 1 est montée dans une portion proche de la partie finale d'une chaîne de conditionnement de GPL en bouteilles, au-dessus d'un convoyeur 1 à rives latérales, qui transporte des bouteilles remplies de gaz et, en principe, munies chacune d'un robinet fileté à volant de manoeuvre qui se visse d'une position d'ouverture à une position de fermeture, et se dévisse de la seconde position précitée à la première. La machine M a pour fonction de vérifier la présence de ce robinet, de contrôler si ce dernier est ou non défaillant sur le plan de la manoeuvreabilité, de le débloquer le cas échéant, dans toutes mesures raisonnablement compatibles avec une bonne productivité de la machine, afin de ne pas engorger l'ensemble de la chaîne, et enfin, de fermer le robinet par vissage avec un couple de serrage constant et suffisant pour qu'un utilisateur, même âgé, puisse l'ouvrir manuellement, la machine M devant permettre d'éliminer, le cas échéant, toute bouteille dont le robinet est bloqué ou fou en rotation, difficile à serrer, et ne répond donc pas aux critères de sécurité imposés.

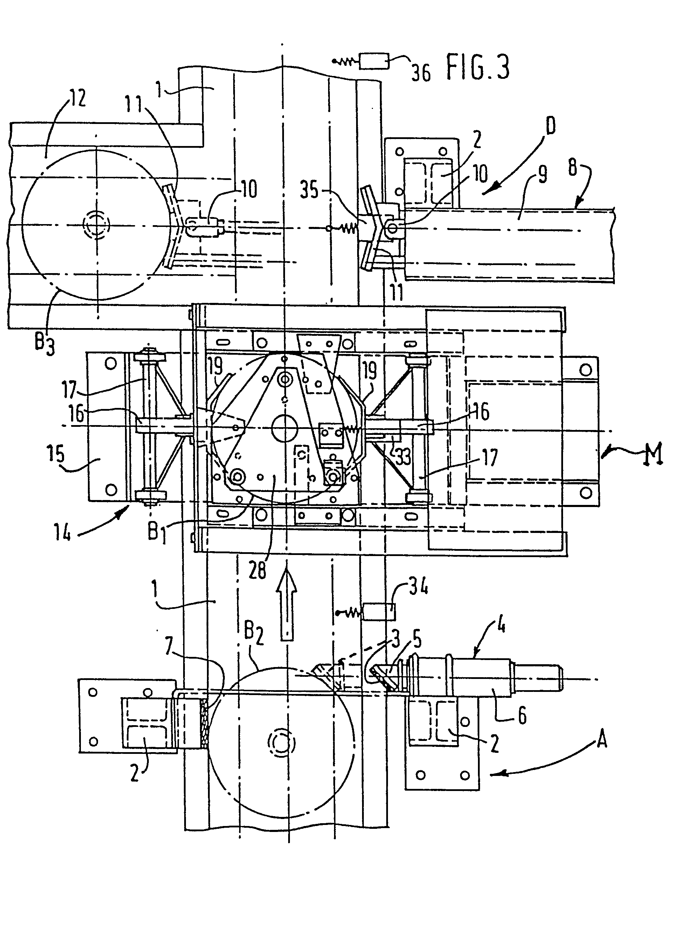

Sur cette chaîne à convoyeur 1, la machine M est implantée entre un poste d'arrêt A des bouteilles, situé en amont et, en aval, un poste de déviation D, ou de mise au rebut des bouteilles dont le robinet a été jugé défaillant (bloqué ou fou en rotation ou difficile à visser) ou sans robinet. Sur des montants 2, qui appartiennent au châssis du convoyeur 1, le poste d'arrêt A comprend essentiellement une butée escamotable constituée par un patin en caoutchouc 3, incliné vers l'amont et porté par l'extrémité libre de la tige 5 d'un vérin pneumatique 4 dont le cylindre 6 est fixé à un montant 2, d'un côté du convoyeur 1, de sorte qu'en position «tige rentrée» (représentée en traits pleins sur la Fig. 3) les bouteilles sont librement entraînées par le convoyeur 1 vers l'aval du poste A, c'est-à-dire vers la machine M, et qu'en position «tige sortie» (représentée en traits interrompus sur la Fig. 3) le patin 3 est placé dans la trajectoire des bouteilles et retient une bouteille, telle que $B_2$ sur la Fig. 3, en coopération avec un patin fixe 7 porté par un montant 2 de l'autre côté du convoyeur 1.

Le poste de déviation D comprend essentiellement un vérin pneumatique 8, dont le cylindre 9 est également fixé à un montant 2, et dont la tige 10 porte à son extrémité libre, un poussoir 11 en forme de V, qui transfère les bouteilles sortant de la machine M, et à mettre au rebut, du convoyeur principal 1 au convoyeur transversal de dérivation 12, lorsque la tige 10 est sortie, comme représenté en traits interrompus pour la bouteille $B_3$ sur la Fig. 3.

Les organes moteurs de puissance de l'ensemble de la machine M et des postes A et D sont constitués par des vérins pneumatiques, sauf pour l'un d'entre eux, décrit ci-dessous, qui équipe la tête de contrôle de la machine M et qui est une turbine pneumatique réversible. Ces vérins et cette turbine sont alimentés en air comprimé par des distributeurs de puissance, qui sont actionnés par des signaux pneumatiques. Ces signaux peuvent être émis par des émetteurs tout pneumatiques, mais, dans l'exemple préféré décrit ci-dessous, ces signaux sont émis par des électrovannes pilotées elles-mêmes par des ordres électriques délivrés par un automate d'asservissement programmable, en fonction du mode de fonctionnement de la machine qui est sélectionné.

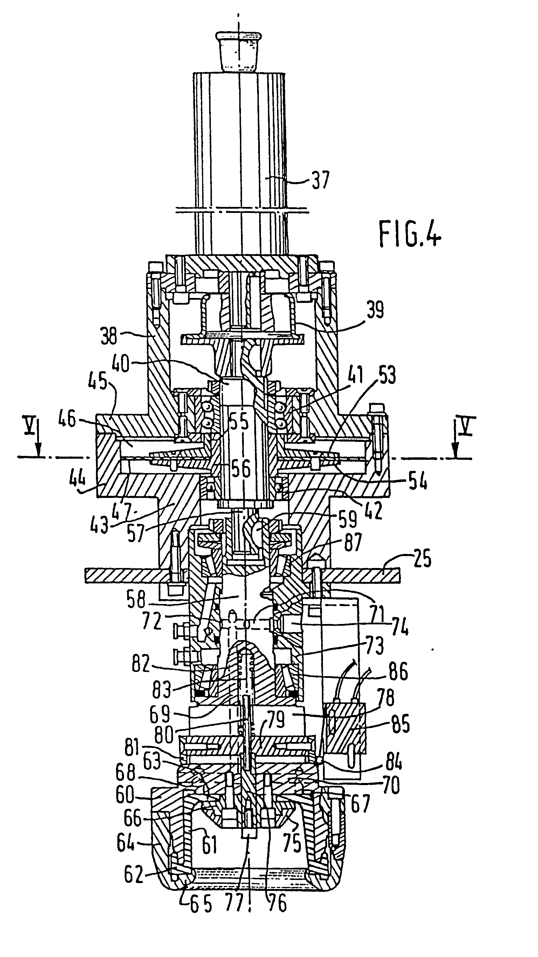

La machine M comprend un bâti 13 en forme de potence, dont la base est accolée au châssis 15, s'étendant transversalement sous le convoyeur 1, d'un étau-centreur 14 comportant deux machoires opposées 16. Chacune d'elles est coudée et montée pivotante par sa partie coudée autour d'un axe 17 horizontal, s'étendant parallèlement au convoyeur 1, latéralement et en dessous de ce dernier. Le bras supérieur 18 de chaque machoire 16 porte, à son extrémité, un arceau 19 de blocage des bouteilles, tandis que l'extrémité du bras inférieur 20 de chaque machoire 16 est engagée entre deux plaques, telles que 21, solidaires de l'extrémité libre de la tige 23 d'un vérin 22 dont le cylindre est fixé verticalement au châssis 15, de sorte que la sortie de la tige 23 du vérin 22 commande l'écartement l'un de l'autre des deux arceaux 19 par pivotement des deux machoires 16 vers l'extérieur, par rapport à l'axe longitudinal du convoyeur 1, autour de leur axe 17, en position d'ouverture de l'étau-centreur 14, alors que la rentrée de la tige 23 dans le cylindre du vérin 22 commande, par pivotement en sens opposé des machoires 16, la fermeture de l'étau 14, dont les deux arceaux 19 viennent bloquer entre eux une bouteille telle que la bouteille $B_1$ sur les Fig. 1 à 3, en la centrant de sorte que son axe (XX) et celui de son robinet à volant V soit sensiblement aligné avec l'axe de la tête de contrôle 24, montée la partie supérieure du bâti 13, et plus précisément décrite ci-dessous, en particulier en référence à la Fig. 4. Cette tête de contrôle 24 est supportée par une platine 25 fixée à l'extrémité inférieure de trois colonnes de guidage 26, verticales et mobiles, montées chacune coulissante dans un manchon 27 solidaire du bâti 13. Les extrémités supérieures des colonnes 26 sont également fixées à une platine d'entretoisement 28 qui coulisse en bloc avec elles. L'équipage mobile constitué par la tête de contrôle 24, les platines 25 et 28 et les colonnes de guidage 26 est translaté selon l'axe (XX) de la tête 24 par rapport au bâti 13 à l'aide d'un vérin 29, dont le cylindre est fixé au bâti 13 et dont la tige 30 est fixée à la platine 25, de sorte que la sortie de la tige 30 commande la descente de l'équipage mobile vers une bouteille retenue et centrée dans l'étau 14 et dont le robinet à volant V est à contrôler, et que la rentrée de la tige 30 commande la remontée de l'équipage mobile après que ce contrôle e été effectué.

L'une des colonnes de guidage mobile 26 porte, à son extrémité supérieure, un drapeau 31 (voir Fig. 2) qui vient occulter un capteur inductif 32 supporté par le bâti 13, lors de la descente de l'équipage mobile, afin que le capteur 32 délivre, à cet instant, un signal de début de cycle «électronique» à l'automate programmable qui gère le fonctionnement de la machine et qui est présenté ci-dessous.

Sur les Fig. 1 à 3, on a également représenté schématiquement quatre détecteurs de présence ou contacteurs-témoins, destinés à être actionnés par les bouteilles afin de donner, sous forme de signaux pneumatiques, des informations sur la présence éventuelle de bouteille. Ces témoins sont d'une structure bien connue: chacun comprend un palpeur supporté par un ressort à l'extrémité de la tige d'un petit vérin pneumatique. Lorsque le vérin est alimenté, la tige est sortie et le palpeur est placé sur la trajectoire des bouteilles, de sorte que le contacteur associé au palpeur soit actionné au passage d'une bouteille. Un premier contacteur-témoin 33 est fixé dans l'axe du bâti 13 de la machine M et commande le début du cycle «pneumatique» de la machine M, lorsqu'il détecte l'arrivée d'une bouteille telle que $B_1$ entre les deux machoires ouvertes 16 de l'étau-centreur 14. Ce témoin 33 commande aussitôt l'alimentation du vérin 22 pour rentrer la tige 23 de ce dernier et fermer les machoires 16 de l'étau 14 autour de la bouteille $B_1$, afin de la bloquer et de la centrer. Simultanément, le témoin 33 commande l'alimentation en air d'un second contacteur-témoin 34, monté entre le poste d'arrêt A et la machine M, de sorte que ce témoin 34 soit sur la trajectoire des bouteilles et commande la sortie de la butée escamotable 3 du poste d'arrêt, afin d'arrêter une bouteille suivante $B_2$ lorsqu'une bouteille $B_1$ est en cours de contrôle dans la machine M. Un troisième contacteur-témoin 35 est monté dans l'axe du poste de déviation D, et il n'est alimenté en air que si la machine M a détecté, comme décrit ci-dessous, un robinet à volant V défectueux sur une bouteille. Au passage de la bouteille concernée, après l'ouverture de l'étau-centreur 14, lorsque le témoin 35 détecte la présence de cette bouteille, il commande son éjection vers le convoyeur de déviation 12 par l'action du vérin à poussoir 11. Enfin, le quatrième contacteur-témoin 36 est placé en aval du poste de déviation, sur le convoyeur principal 1, et a pour fonction de ne permettre la libération par l'étau 14 d'une bouteille en fin de contrôle que si le passage vers l'aval de la chaîne est libre.

La partie active de la machine M est sa tête de contrôle 24, qui est à présent décrite en référence à la Fig. 4. Cette tête de contrôle 24 comprend, à sa partie supérieure, une turbine réversible 37, alimentée en air à une pression constante de 0,25 MPa pour tourner dans un sens de rotation qui correspond au vissage d'un robinet à volant V, lorsque la tête 24 est en position sur le volant comme décrit ci-dessous, et la turbine est alimentée en air à une pression constante de 0,6 MPa pour tourner dans le sens du dévissage du volant V. Cette turbine 37, vissée par sa base sur la partie supérieure d'un demi-carter supérieur 38 de la tête, a son arbre de sortie lié par un accouplement élastique 39, logé dans ce demi-carter 38, à un axe intermédiaire 40. Ce dernier est monté en rotation par des roulements à billes 41 et 42 respectivement dans le demi-carter supérieur 38 et dans le demi-carter inférieur 43, qui présente un collet radial battu 44 par lequel il est fixé à l'aide de vis à un collet radial 45 du demi-carter supérieur 38, de sorte que les deux collets 44 et 45 des deux demi-carters assemblés 38 et 43 délimitent entre eux une chambre annulaire 46 dans laquelle est disposée une roue dentée 47 montée solidaire en rotation de l'axe 40.

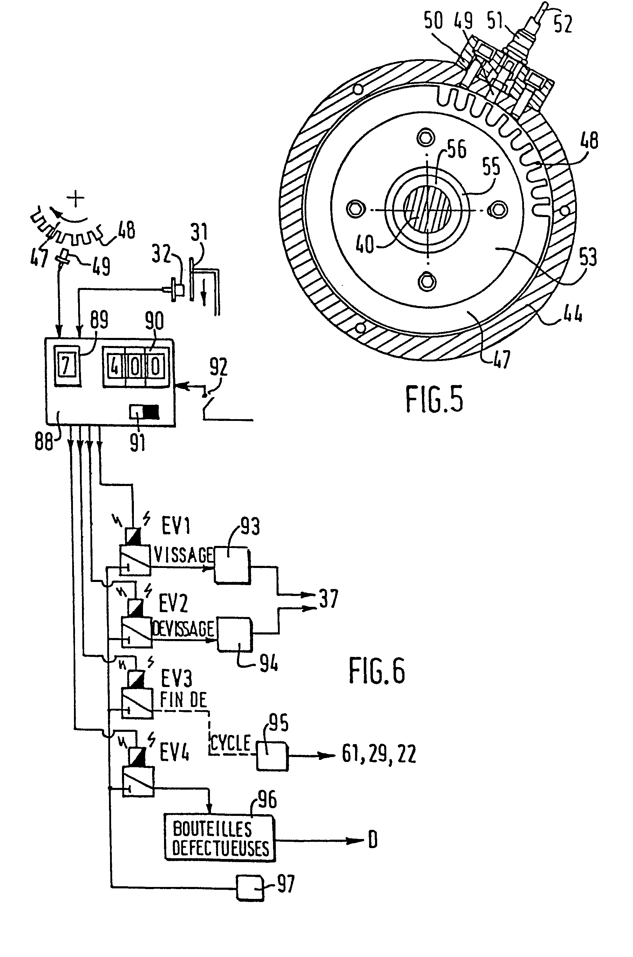

Comme représenté sur la Fig. 5, la roue dentée 47, en un matériau ferromagnétique, comporte 40 dents 48 séparées les unes des autres par 40 évidements, un capteur inductif 49 est fixé dans un perçage radial ménagé dans le rebord périphérique du collet 44, et se trouve protégé par une embase 50, vissée contre la face externe du collet 44 et sur laquelle se monte un connecteur 51 de liaison au capteur 49, et lui-même relié à l'automate par un câble 52 de transmission des signaux pulsatoires émis par le capteur 49 (non rotatif) lorsque les dents 48 défilent en regard du fait de la rotation de la roue 47 dans l'un ou l'autre sens. Un tour complet de la roue 47 correspond donc à l'émission de 40 impulsions, qui sont comptées par un compteur de l'automate comportant également un calculateur permettant de calculer l'amplitude et la vitesse de la rotation angulaire de la roue 47, respectivement proportionnelles au nombre total d'impulsions et au nombre d'impulsions par unité de temps.

La roue 47 a la forme d'un anneau serré entre deux flasques 53 et 54, assemblés l'un à l'autre par quatre vis et solidaires chacun de l'un de deux manchons 55 et 56, emmanchés l'un dans l'autre entre les roulements à billes 41 et 42 et autour de l'axe 40, dont le manchon interne 56 est solidaire en rotation. Par son extrémité inférieure 57, de diamètre réduit, l'axe 40 est engagé dans l'extrémité supérieure tubulaire d'une broche 58 et solidaire en rotation de cette dernière par une clavette 59. L'extrémité inférieure de la broche 58 est élargie et conformée en embout tubulaire 60 dans lequel est retenue une membrane élastiquement déformable 61, par exemple en caoutchouc. Cette membrane 61 en forme de fourreau, présente un rebord d'extrémité externe 62 qui est rabattu vers l'extérieur et vers l'arrière, par dessus le bord inférieur de l'embout 60, et un rebord d'extrémité interne 63 qui est en saillie radiale vers l'intérieur. La membrane 61 est maintenue dans l'embout 60, d'une part, par un couvercle tubulaire 64 vissé autour de l'embout 60 et présentant un bourrelet radial interne 65 qui pince le rebord 62 contre l'embout 60, et, d'autre part, par une rondelle de maintien 66 vissée contre le fond de l'embout 60 et pinçant avec étanchéité le rebord 63 contre ce dernier. La membrane 61 délimite ainsi avec la paroi interne de l'embout 60 une chambre étanche à volume variable qui, en position non déformée ou de repos de la membrane 61 (voir Fig. 4), se limite à une gorge 67 annulaire et périphérique dans le fond de l'embout. Cette chambre 67 est en communication permanente par des canneaux axiaux 68, 69 et radiaux 70, 71, percés dans la broche 58 (et représentés en pointillés sur la Fig. 4), avec une gorge périphérique 72 de la partie supérieure de la broche 58, et en regard de cette gorge 72 débouche un passage radial 74 percé dans le corps 73 d'une boîte à roulements, dans laquelle la broche 58 est montée en rotation par sa partie supérieure.

Ce passage 74 est raccordé par une conduite souple (non représentée) à un distributeur reliant lui-même sélectivement cette conduite à une source d'air comprimé, à pression réglable par la manoeuvre d'un détendeur, ou à une source d'aspiration, de sorte que la chambre 67 puisse être, d'une part, pressurisée, afin de déformer la membrane 61 jusqu'à ce qu'elle s'applique autour d'un volant de robinet V et qu'elle l'emprisonne en se solidarisant à lui, après que la tête 24 a été descendue au point que ce volant V soit engagé dans l'embout 60, et, d'autre part, mise en dépression, afin de rappeler la membrane 61 en position initiale et de libérer le volant V, même si la membrane 61 a perdu ses caractéristiques d'élasticité.

La rondelle 66 est recouverte d'une garniture antichocs en caoutchouc 75, de forme tronconique, qui forme une cale ou une butée limitant l'engagement des volants de robinet V dans l'embout 60, indépendamment de la forme circulaire, carrée ou en étoile des volants. On réalise ainsi un mors de liaison universelle à membrane déformable, à l'extrémité inférieure de la tête de contrôle 24.

La garniture 75, la rondelle 66 et le fond de l'embout 60 sont percés d'un alésage axial dans lequel est monté coulissant un axe 76, dans l'extrémité inférieure duquel est vissé un palpeur 77, et dont l'extrémité supérieure, qui débouche dans un évidement transversal 78 de la broche 58, porte une entretoise 79, traversant l'évidement 78, et se prolonge d'une tige filetée 80. Une collerette 81, qui entoure la broche 58 avec un faible jeu radial, est vissée sur l'entretoise 79, et un ressort de compression 82, guidé autour de la tige 80 et en appui par son extrémité inférieure contre l'entretoise 79, est engagé dans un alésage axial 83 de la broche 58 et prend appui par son extrémité supérieure contre le fond de cet alésage 83, dans lequel vient se loger la tige 80 lorsque le palpeur 77 et l'axe 76 sont repoussés vers le haut, à l'encontre du ressort de rappel 82. Le montage est ainsi ajusté qu'en position de repos, le ressort 82 repousse l'entretoise 79 et l'axe 76 vers le bas, dans une position limitée par la venue en butée de la collerette 81 contre le fond de l'embout 60. Dans cette position, seul le palpeur 77 est en saillie par rapport à la garniture 75 dans le logement de l'embout 60. Simultanément, la collerette 81 en position basse repousse un contact mobile 84 d'un détecteur 85, de sorte que ce dernier ne délivre aucun signal. Par contre, si la tête de contrôle 24 est abaissée, et son embout 60 engagé sur un robinet d'une bouteille maintenue dans l'étau-centreur 14, et si cette bouteille est pourvue d'un volant de robinet V, ce volant repousse le palpeur 77, l'axe 76 et la tige 80 contre le ressort 82, et la collerette 81 est également soulevée avec l'entretoise 79, de sorte que le contact mobile 84 s'écarte élastiquement du détecteur 85, qui délivre alors un signal pneumatique témoignant de la présence d'un volant de robinet V, dans l'embout 60 de la tête de contrôle 24.

Le détecteur 85 est porté par le corps 73 de la boîte à roulements, et ce corps 73 est centré dans le demi-carter inférieur 43 et vissé contre ce dernier et avec ce dernier sur la platine 25 de liaison aux colonnes de guidage 26 (voir Fig. 1 et 2). Ainsi, le corps 73 de la boîte à roulements est coaxial aux demi-carters 38 et 43, eux-mêmes coaxiaux l'un à l'autre par un centrage relatif de leurs collets 44 et 45. Les demi-carters 38 et 43 et le corps 73 de la boîte à roulements servent de logement aux roulements 41 et 42 et aux butées à rouleaux coniques 86 et 87 qui supportent l'axe intermédiaire 40 et la broche 58 en rotation.

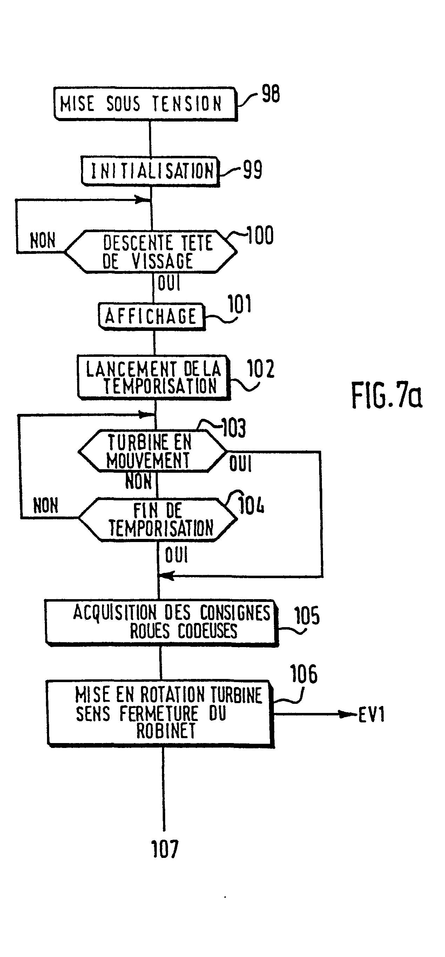

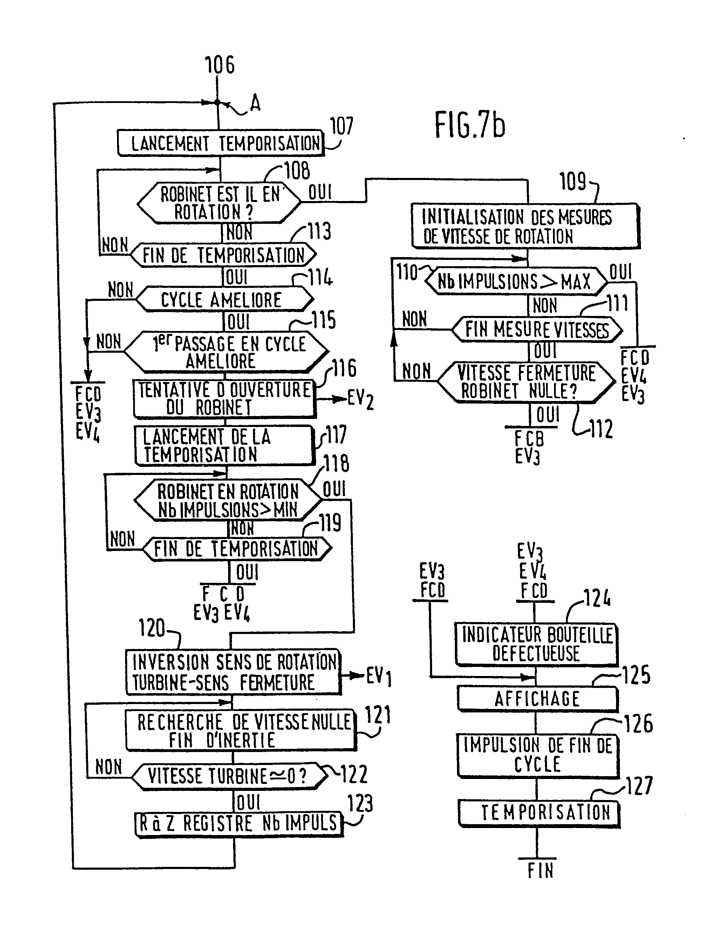

L'automate programmable est essentiellement une unité de calcul à microprocesseur, gérant un grand nombre des données de fonctionnement de la machine, dont une partie stockée en mémoire dans le microprocesseur après programmation fait que le déroulement des opérations se développe selon un logigramme bien codifié, précisé ci-dessous en référence aux Fig. 7a et 7b. Les autres données de fonctionnement sont, pour certaines, établies manuellement par affichage de valeurs de consigne, et pour le reste, obtenues par la réception de signaux électriques délivrés par des capteurs.

Comme représenté schématiquement sur la Fig. 6, l'automate 88 comporte une roue codeuse 89 permettant l'affichage manuel d'une valeur de consigne, comprise entre 0 et 9, correspondant à un seuil minimum d'impulsions délivrées par le capteur inductif 49 pour prendre en compte le glissement possible entre la membrane 61 et un volant de robinet V avant que la broche 58, entraînée en rotation, n'entraîne effectivement ce volant à la suite du gonflage de la membrane 61 autour de ce volant et de l'alimentation de la turbine 37. L'automate comporte également trois autres roues codeuses juxtaposées 90, permettant l'affichage manuel d'une valeur de consigne comprise entre 0 et 999, et correspondant à un seuil maximum d'impulsions émises par le capteur 49, par exemple 400, qui est supérieur au nombre d'impulsions obtenues lorsque le volant de robinet V est dévissé ou vissé sur sa course maximale, de l'une à l'autre des positions d'ouverture et de fermeture complètes. L'automate comporte également un commutateur de sélection de cycle 91, basculable de l'une à l'autre de deux positions correspondant l'une à un cycle simplifié et l'autre à un cycle amélioré, qui sont décrits ci-dessous en référence aux figs. 7a et 7b. Les données de fonctionnement qui peuvent être modifiées au gré de l'utilisateur sont donc le choix du cycle géré par l'automate, par action sur le commutateur 91, et le choix du nombre d'impulsions minimum et du nombre d'impulsions maximum, qui sont affichés comme valeurs de consigne, respectivement sur les roues codeuses 89 et 90. Ces choix étant faits et affichés, les consignes correspondantes sont prises en compte par le microprocesseur comme information de base. L'automate, mis sous tension électrique par le conducteur 92, reçoit comme données de fonctionnement provenant de capteurs, d'une part, le signal électrique de début de cycle délivré sous forme d'une impulsion par le capteur inductif 32, lorsqu'il est occulté par le drapeau 31 à la descente à la tête de contrôle 24, et d'autre part, les signaux électriques pulsatoires délivrés par le capteur inductif 49 proportionnellement au nombre de dents 48 de la roue dentée 47 qui défilent en face de lui, lorsque la broche 58 de la tête 24 est entraînée en rotation par la turbine 37.

Après traitement des données reçues, en fonction des données affichées et du programme en mémoire, l'automate délivre des signaux électriques de pilotage de 4 électrovannes EV1 à EV4. Deux de ces signaux sont dits «actifs», car ils commandent une action mécanique sur la tête de contrôle 24. Il s'agit des signaux de pilotage des électrovannes EV1 et EV2, qui commandent respectivement les distributeurs pneumatiques de puissance 93 et 94, alimentant la turbine 37 respectivement dans le sens du vissage et du dévissage. Les deux autres signaux sont dits «d'étape de cycle». Il s'agit des signaux de pilotage des électrovannes EV3 et EV4. Par l'activation de l'électrovanne EV3, l'automate délivre un signal de fin de cycle, qui commande l'alimentation pneumatique d'un circuit logique pneumatique 95, de conception classique, commandant la poursuite de la fin du cycle pneumatique pour libérer une bouteille en fin de contrôle, c'est-à-dire commandant successivement le dégonflage de la membrane 61 par mise en communication de la chambre 67 avec une source de dépression, afin de désolidariser la tête de contrôle 24 du volant de robinet V de la bouteille contrôlée, puis le relevage de la tête de contrôle 24 par la rentrée de la tige 30 dans le cylindre du vérin 29, puis enfin, la sortie de la tige 23 du vérin 22 de l'étaucentreur 14 afin d'écarter les machoires 16 de ce dernier et de libérer la bouteille. L'autre signal «d'étape de cycle» est le signal de pilotage de l'électrovanne EV4 qui est un signal de bouteille défectueuse (c'est-à-dire sans volant de robinet ou avec un volant bloqué, ou fou en rotation ou difficile à manoeuvrer). Dans ce cas, l'électrovanne EV4 délivre un signal pneumatique à un circuit logique pneumatique 96 à mémoire, qui commande le poste de dérivation D afin de permettre la mise au rebut de la bouteille correspondante.

La machine décrite ci-dessus, en référence aux Fig. 1 à 6, fonctionne de la manière suivante. En suivant le logigramme des figures 7a et 7b on constate qu'après mise sous tension en 98 et une phase d'initialisation en 99, par affichage manuel des consignes sur les roues codeuses 89 et 90, l'automate 88 reste dans l'attente, en 100, du signal de début de cycle délivré par le capteur 32 à la descente de la tête de contrôle 24.

Sur le convoyeur 1, lorsqu'une bouteille $B_1$ actionne le témoin 33, un début de cycle pneumatique est commandé par un circuit logique à séquenceur pneumatique. Ce circuit commande la fermeture de l'étau-centreur 14, qui immobilise la bouteille dans l'axe XX de la tête 24. Cette opération étant terminée, ce circuit commande l'alimentation du vérin 29, qui descend la platine 25 et la tête de contrôle 24. Ceci a pour effet que le drapeau 31 occulte le capteur 32 qui délivre à l'automate 88 le signal électrique de début de cycle. L'automate affiche alors en 101, sur un dispositif d'affichage qu'il comporte, la durée entre la mise sous tension et le début du premier cycle ou la durée entre le début du cycle précédent et le début de cycle actuel. Simultanément, l'automate lance la phase électronique du cycle de fonctionnement de la machine en déclenchant une temporisation réglée à 0,5 s, comme indiqué en 102. Cette temporisation est suffisante pour que la tête de contrôle 24 vienne accoster par son embout 60 d'extrémité inférieure le volant du robinet de la bouteille immobilisée dans l'étau 14 et qu'ensuite, le palpeur central 77 soit soulevé et entraîne par l'axe 76 la collerette extérieure 81 de manière à relacher le contact mobile 84, de sorte que le détecteur 85 délivre au circuit de commande pneumatique un signal de présence du robinet, et qu'en conséquence, ce circuit commande le gonflage de la membrane 61 en pressurisant la chambre 67 à une pression réglée préalablement à l'aide d'un manodétendeur. Lorsque l'opération de liaison de la tête de contrôle 24 au volant de robinet V est ainsi réalisée , un signal déclenche l'alimentation en air de la turbine 37 par le distributeur de puissance 93, de sorte que la broche 58 de la tête de contrôle 24 est entraînée en rotation dans le sens du vissage, la pression d'alimentation de la turbine 37 étant réglable et choisie, de sorte que le couple de vissage obtenu soit compris entre 4 et 5 mN. Au cours de la première temporisation de 0,5 s, qui s'achève en 104 sur le logigramme, l'automate est dans l'attente d'impulsions en provenance du capteur 49 situé en face de la roue dentée 47 pour confirmer la mise en rotation de la turbine, comme indiqué en 103. A la fin de cette première temporisation, l'automate enregistre s'il y a eu ou non comptage d'impulsions ou présence d'une impulsion, donc s'il y a eu ou non rotation de la broche. En parallèle et indépendamment de la mise ou non en rotation de la broche, l'automate réalise en 105 l'acquisition des consignes affichées sur les roues codeuses et, simultanément, d'une part délivre un signal électrique à l'électrovanne EV1, qui commande l'alimentation de la turbine 37 et son entraînement en rotation dans le sens du vissage, pour la fermeture du volant de robinet V, comme indiqué en 106, et d'autre part, le déclenchement d'une seconde temporisation de 0,2 comme indiqué en 107. Au cours de l'intervalle de temps correspondant à cette seconde temporisation, qui s'achève en 113 l'automate enregistre s'il y a comptage d'impulsions délivrées par le capteur 49 et il compare le résultat obtenu aux valeurs de consignes affichées, afin de déterminer dans quelle condition le volant du robinet est mis en rotation, comme indiqué en 108.

Plusieurs cas peuvent se présenter: dans le cas le plus fréquent, le nombre des impulsions comptées est compris entre les valeurs de consignes inférieure et supérieure tandis que dans 0,5 à 1% des cas, ce nombre est inférieur à la consigne inférieure, et que très rarement ce nombre est supérieur à la consigne supérieure. Pour déterminer dans quelles conditions le robinet a ou non été entraîné en rotation, par la tête de contrôle 24, après avoir constaté en 108 que le nombre d'impulsions comptées est supérieur à la consigne inférieure et après une phase d'initialisation des mesures de vitesses de rotation, qui est indiquée en 109, l'automate vérifie en 110 si le nombre d'impulsions comptées pendant la rotation de la broche 58 est supérieur à la consigne maximum affichée sur la roue codeuse 90. Si oui, ceci signifie que le volant de robinet est fou en rotation sur la bouteille. L'automate délivre alors un signal de fin de cycle pour bouteille défectueuse (FCD) et actionne les électrovannes EV3 et EV4 pour commander la fin du cycle pneumatique (dégonflage de la membrane 61 et arrêt de la rotation de la turbine 37, remontée de la tête 24 et ouverture de l'étau 14) et éjection de la bouteille par le poste de dérivation. Si non, comme on a constaté en 108 que le nombre d'impulsions comptées est supérieur au seuil minimum (et que ce nombre est donc compris entre les deux seuils), l'automate 88 continue à mesurer la vitesse de rotation, comme indiqué en 111, en scrutant toutes les 0,1 s l'apparition d'impulsions de rotation et l'automate continue à comparer le nombre d'impulsions comptées à la consigne maximum. Simultanément, l'automate maintient le signal électrique qui pilote l'électrovanne EV1 même après la fin de la temporisation de 0,2 s.

Si la valeur de seuil maximum est atteinte, comme expliqué ci-dessus, l'automate coupe le signal de pilotage de l'électrovanne EV1 afin de ne plus entraîner la turbine 37, et simultanément, il délivre un signal de fin de cycle pour bouteille défectueuse (FCD) en actionnant les électrovannes EV3 et EV4 afin de commander la poursuite du cycle pneumatique pour libérer la bouteille de l'étrier 14 et de commander ensuite l'éjection de cette bouteille par le poste de dérivation. A la fin des mesures de vitesse, si la vitesse de vissage du volant de robinet est nulle, comme indiqué en 112, c'est-à-dire si l'automate détecte une absence d'impulsion provenant du capteur 49 pendant la durée de scrutation (de 0,1 s), on considère que le robinet est normalement vissé en position fermée, et l'automate délivre un signal de fin de cycle pour une bouteille en bon état (FCB) et actionne l'électrovanne EV3 pour commander la poursuite du cycle pneumatique jusqu'à la libération de la bouteille par l'étau 14. Par contre, si on a détecté en 108 que le nombre d'impulsions comptées est inférieur à la consigne minimum, ce qui signifie une absence de rotation du volant de robinet, la poursuite du fonctionnement s'effectuera, après la fin de la temporisation indiquée en 113, selon le cycle correspondant à la position donnée par l'utilisateur au commutateur de sélection de cycle 91.

Si le cycle choisi n'est pas le cycle amélioré, indiqué en 114, le robinet est considéré comme bloqué et l'automate coupe le signal de pilotage de l'électrovanne EV1 et envoie un signal aux electrovannes EV3 et EV4 pour commander la poursuite du cycle pneumatique libérant la bouteille correspondante et l'éjection de cette bouteille (signal de fin de cycle pour bouteille défectueuse FCD). Par contre, si le cycle choisi en 114 est le cycle amélioré, l'automate enregistre en 115 le premier passage en cycle amélioré. L'automate commande alors une tentative d'ouverture du robinet, en 116, en coupant le pilotage de l'électrovanne EV1 et en pilotant l'électrovanne EV2, afin d'entraîner la turbine 37 dans le sens du dévissage. Simultanément, l'automate efface de sa mémoire le nombre d'impulsions comptées au vissage, et il déclenche en 117 une temporisation de 0,4 s. Au dévissage, l'automate scrute en permanence le nombre d'impulsions reçues et compare ce nombre, en 118, à la consigne minimum. Si, à la fin de la temporisation de 0,4 s en 119, le nombre d'impulsions au dévissage est inférieur à la consigne minimum, le robinet est supposé bloqué et jugé défectueux. L'automate coupe alors le pilotage de l'électrovanne EV2, pour interrompre la rotation de la turbine, et donne un ordre de fin de cycle pour bouteille défectueuse (FCD), c'est-à-dire qu'il pilote les électrovannes EV3 et EV4, pour commander respectivement la poursuite du cycle pneumatique et l'éjection de la bouteille correspondante.

Par contre, si on constate en 118 que le nombre d'impulsions reçues au dévissage est supérieur à la consigne minimum, avant la fin de la temporisation de 0,4 s, l'automate coupe le pilotage de l'électrovanne EV2 et délivre un signal à l'électrovanne EV1 pour interrompre le dévissage et reprendre le vissage. Cette inversion du sens de rotation de la turbine, indiquée en 120, n'est pas instantanée du fait de l'inertie de la broche 58 due à son poids. L'automate 88 est programmé pour rechercher, en 121, le moment du basculement du sens de rotation du dévissage vers le vissage, c'est-à-dire du moment de vitesse nulle au changement de sens de rotation. A cette fin, simultanément à l'ordre de pilotage de l'électrovanne EV1, pour commander le vissage, l'automate commande la scrutation des impulsions pendant des périodes de 0,05 s. Lorsque, pendant une période de scrutation, le nombre d'impulsions comptées est inférieur à un autre seuil très faible, par exemple de 3 impulsions, on considère que la vitesse de rotation de la turbine est nulle, comme indiqué en 122. L'automate commande alors la remise à 0 du registre de comptage du nombre des impulsions reçues, comme indiqué en 123 et l'ordre de bouclage du cycle remonte au point A du programme. L'automate déclenche à nouveau en 107 une temporisation de 0,2 s et compare le nombre d'impulsions comptées au revissage à la consigne minimum. Si, à la fin de cette temporisation, en 113, ce nombre d'impulsions comptées est inférieur à la consigne minimum, le cycle se poursuit en 114, selon le cycle amélioré, mais, en 115, le premier passage en cycle amélioré a déjà été enregistré. L'automate est programmé pour ne pas autoriser un second passage en cycle amélioré, et il considère le robinet comme étant défectueux. En conséquence, il commande une fin de cycle pour bouteille défectueuse (FCD) et il pilote les électrovannes EV3 et EV4 pour commander la fin de cycle pneumatique et la dérivation de la bouteille correspondante par le poste D. Mais, si le nombre d'impulsions comptées au revissage est compris entre les consignes minimum et maximum, et qu'on enregistre une absence d'impulsion provenant du capteur 49, pendant une période de scrutation de 0,1 s, ce qui indique une vitesse de rotation nulle, le robinet est considéré comme ayant été débloqué et vissé jusqu'en position de fermeture normale. L'automate pilote alors l'électrovanne EV3 pour commander la fin du cycle pneumatique amenant la libération de la bouteille par l'étau 14. Enfin, si le nombre d'impulsions comptées au revissage est supérieur à la consigne maximum, l'automate délivre un signal de fin de cycle pour bouteille défectueuse (FCD) et il pilote les électrovannes EV3 et EV4.

Comme représenté sur la Fig. 7, la fin du cycle comprend, lorsque le contrôle a amené à conclure que le robinet de la bouteille contrôlée est défectueux, une phase d'affichage d'un signal correspondant sur un indicateur de bouteille défectueuse 124, suivi, pour tous les cas de contrôle, d'un affichage 125 de la vitesse de la turbine et du nombre d'impulsions pour le vissage ou le dévissage du robinet, respectivement sur une partie de droite et sur une partie de gauche d'un dispositif d'affichage de l'automate 88. Cette phase d'affichage est suivie de l'émission de l'impulsion de fin de cycle en 126, ce qui correspond à l'émission par l'électrovanne EV3 d'un ordre de commande pneumatique au circuit logique pneumatique qui assure le dégonflage de la membrane 61, le relevage de la tête de contrôle 24 et l'ouverture de l'étau 14 pour libérer la bouteille, et, le cas échéant, à l'émission par l'électrovanne EV4 d'un ordre de dérivation de la bouteille, lorsque celle-ci a été jugée défectueuse. La phase de fin de cycle se termine par une temporisation de 0,3 s en 127, à la fin de laquelle l'indicateur de bouteille défectueuse 124 est remis à 0 et la machine et l'automate reviennent en phase d'attente en début de cycle.

On note que le cycle amélioré accroît les performances de la machine en évitant de juger «défectueuse» une bouteille dont le robinet est normalement fermé et qui n'est donc pas bloqué en position partiellement ou totalement ouverte.

Afin de faciliter la conduite de la machine par l'utilisateur et de l'informer du déroulement du fonctionnement, le système d'affichage est réalisé au moyen de diodes lumineuses exposées dans une fenêtre d'un coffret logeant l'automate et le circuit logique pneumatique associé. Ces diodes permettent d'afficher la vitesse de la turbine, exprimée en tour/mn, le nombre d'impulsions de la dernière phase active (vissage ou dévissage), le temps écoulé entre deux débuts de cycle successifs. De plus, chaque électrovanne EV1 à EV4 comporte une diode qui est allumée lorsque l'électrovanne correspondante est activée par un signal électrique reçu de l'automate, chacun des capteurs inductifs 32 et 49 comporte également une diode qui s'allume en fonction de l'occultation du capteur respectivement par le drapeau 31 ou par les dents 48 de la roue dentée 47. De même, le commutateur de sélection de cycle est associé à une diode qui s'allume pour visualiser le cycle sélectionné.

Enfin, un commutateur de sélection de cycle avec ou sans automate, repéré en 97 sur la Fig. 6, est prévu, de préférence dans le coffret pneumatique, et permet soit d'autoriser l'alimentation en air des électrovannes EV1 à EV4 pour bénéficier du mode de fonctionnement avec asservissement électronique par l'automate, soit de couper l'alimentation en air des électrovannes, si un incident met par exemple, l'automate hors service. Dans ce dernier cas, la machine fonctionne uniquement en visseuse, sans asservissement par l'automate. Toute le pilotage de la machine est alors assuré par des donneurs d'ordre pneumatiques, tels les témoins de présence et les séquenceurs.

## Revendications

1. Machine de contrôle de l'état bloqué et/ou serré d'un organe fileté (V) tel qu'un volant de robinet, monté en rotation sur un support (B₂), telle qu'une bouteille de gaz, et mobile par vissage et dévissage entre deux positions extrêmes dont l'une est une position de fermeture et l'autre une position d'ouverture, qui correspondent respectivement à l'état vissé et à l'état dévissé de l'organe fileté (V), la machine comprenant:
— un bâti (13),
— un dispositif de blocage et centrage (14) de support (B₁, B₂, B₃) d'organe fileté (V), qui est associé au bâti (13) afin de bloquer tout support de manière à positionner l'organe fileté (V) équipant éventuellement le support dans une position axiale (XX) prédéterminée par rapport au bâti (13),
— une tête de contrôle (24) montée mobile en translation axiale sur le bâti (13),
— un dispositif de liaison universelle (60, 61) permettant une solidarisation amovible de la tête de contrôle (24) audit organe fileté (V),
— un organe moteur (37) d'entraînement, qui entraîne ledit organe fileté (V) par l'intermédiaire du dispositif de liaison universelle (60, 61) autour de l'axe dudit organe fileté (V),
— un dispositif de détection de la rotation et de la vitesse de rotation (47, 49) dudit organe fileté (V) ledit dispositif de détection étant lié audit dispositif de liaison universelle (60, 61), et
— un organe moteur de manoeuvre (29) de la tête de contrôle (24) sur le bâti (13),
caractérisée en ce que ladite tête de contrôle (24) comporte un dispositif de détection (77, 76, 79, 80, 84, 85) de la présence d'un organe fileté (V) sur un support (B₁) bloqué dans le dispositif de blocage et de centrage (14), et en ce que ledit dispositif de liaison universelle (60, 61) comprend un mors à membrane déformable (61) comportant un embout tubulaire (60) d'engagement sur l'organe fileté (V), et une membrane déformable (61), retenue dans l'embout (60) et délimitant avec ce dernier une chambre à volume variable (67) mise sélectivement en communication avec une source d'air comprimé afin d'appliquer et de serrer la membrane (61) autour de la partie de l'organe fileté (V) qui est engagée dans l'embout tubulaire (60) lorsque la tête de contrôle (24) a été translatée vers le support (B₁) de l'organe fileté (V), ladite chambre à volume variable (67) étant mise sélectivement en communication avec une source de dépression afin de rappeler par aspiration la membrane déformable (61) dans une position de libération de l'organe fileté (V).

2. Machine selon la revendication 1, caractérisée en ce que ledit organe moteur d'entraînement en rotation est une turbine pneumatique réversible (37), alimentée sélectivement en air comprimé à deux niveaux de pression réglables par au moins un distributeur de puissance (93, 94) commandé par deux électrovannes dont l'une (EV1) commande la rotation de la turbine (37) dans le sens du vissage de l'organe fileté (V), avec un premier niveau de pression d'alimentation, et dont l'autre (EV2) commande la rotation de la turbine (37) dans le sens du dévissage avec un second niveau de pression qui est supérieur au premier.

3. Machine selon l'une quelconque des revendications 1 et 2, caractérisée en ce que ledit dispositif de détection de la rotation et de la vitesse de rotation comprend un générateur d'impulsion comportant une roue dentée (47) solidaire en rotation du dispositif de liaison universelle (60, 61), et un capteur inductif (49) monté en regard de la roue dentée (47) sur un élément non rotatif (44) de la tête de contrôle (24).

4. Machine selon l'une des revendications 1 à 3, caractérisée en ce que ledit dispositif de détection de la présence d'un organe fileté (V) sur un support (B₁) comprend un palpeur escamotable (77, 76) monté coulissant axialement, avec une course limitée, sur ladite tête de contrôle (24), et rappelé élastiquement dans une position de palpage, dans laquelle il est en saillie vers ledit support (B₁) par rapport au dispositif de liaison universelle (60, 61), afin de venir le premier au contact de l'organe fileté (V) dont ledit support (B₁) est éventuellement équipé, lorsque la tête de contrôle (24) est déplacée vers ledit support, et d'être repoussé à l'encontre des moyens élastiques de rappel (82) par l'organe fileté afin de ne pas gêner la coopération de ce dernier avec le dispositif de liaison universelle (60, 61).

5. Machine selon la revendication 4, telle que rattachée à la revendication 2, caractérisée en ce que le palpeur escamotable (77, 76) est monté coulissant dans un passage axial traversant le fond de l'embout tubulaire (60) et une cale de retenue (66) d'un bord (63) de la membrane déformable (61) contre ledit fond, le palpeur présentant une extrémité (77), qui, en position de palpage, fait saillie par rapport à ladite cale (66) dans l'embout tubulaire (60), tandis que, par son extrémité opposée, il est solidaire en translation axiale d'une collerette (81) d'actionnement d'un détecteur de position (84, 85), monté sur une pièce non rotative (73) de la tête de contrôle (24), de sorte que l'actionnement dudit détecteur de position (84, 85) par la translation du palpeur (77, 76) témoigne de la présence d'un organe fileté (V) dans l'embout tubulaire (60).

6. Machine selon l'une des revendications 1 à 5 caractérisée en ce qu'elle comprend un détecteur de début du cycle de fonctionnement de la machine, ce détecteur comportant un organe d'occultation (31) et un capteur inductif (32) disposés l'un sur le bâti (13) de la machine et l'autre, sur la tête de contrôle (24), de sorte que le capteur soit occulté par l'organe d'occultation et émette un signal de début de cycle lorsque la tête de contrôle (24) est déplacée vers le dispositif de blocage et centrage (14).

7. Machine selon l'une des revendications 1 à 6, caractérisée en ce qu'elle comprend un automate programmable à microprocesseur (88), qui reçoit des signaux du dispositif de détection de la rotation et de la vitesse de rotation (49, 47) et du détecteur de début de cycle (31, 32), et qui commande le fonctionnement de l'organe moteur d'entraînement en rotation (37), ainsi qu'au moins un séquenceur qui est commandé par des détecteurs de position (33) et commande le fonctionnement du dispositif de blocage et centrage (14), de l'organe moteur de manoeuvre (29) de la tête de contrôle (24) sur le bâti (13) et du dispositif de liaison universelle (60, 61).

8. Procédé de contrôle de l'état bloqué et/ou serré d'un organe fileté (V), tel qu'un volant de robinet, monté en rotation sur un support (B₁), tel qu'une bouteille de gaz, et mobile par vissage et dévissage entre deux positions extrêmes dont l'une est une position de fermeture et l'autre une position d'ouverture qui correspondent respectivement à l'état vissé et à l'état dévissé de l'organe fileté (V), consistant:

— à solidariser sensiblement positivement en rotation l'organe fileté (V) et un organe d'entraînement en rotation (58) de l'organe fileté autour de son axe (XX),

— à commander l'application d'un couple de vissage sur l'organe d'entraînement (58),

— à détecter (47, 49) la rotation effective de l'organe d'entraînement (58), et

si la rotation détectée est supérieure à un premier seuil angulaire prédéterminé, à maintenir l'application d'un couple de vissage afin de poursuivre l'entraînement en rotation de l'organe fileté dans le même sens, puis à l'interrompre,

soit à la détection d'une vitesse de rotation nulle, si cette détection est obtenue avant d'atteindre un second seuil angulaire prédéterminé, très supérieur au premier et de préférence, à la course angulaire maximale entre les deux positions extrêmes de l'organe fileté, ce qui témoigne de ce que l'organe fileté est serré en position vissée,

soit à la détection du second seuil angulaire, ce qui témoigne de ce que l'organe fileté est fou en rotation sur un support, et à commander en conséquence la mise au rebut du support et de son organe fileté, tandis que:

si la rotation détectée est inférieure au premier seuil angulaire, on considère que l'organe fileté est bloqué, et le procédé consiste à interrompre l'application du couple de vissage et, selon un cycle simplifié, à commander la mise au rebut du support et de son organe fileté, ce qui intervient après désolidarisation et écartement de l'organe d'entraînement (58) de l'organe fileté (V),

caractérisé en ce qu'il consiste initialement à contrôler par contact (77) la présence d'un organe fileté (V) sur un support, puis, si le contrôle de la présence de l'organe fileté est positif, à exécuter les opérations précédentes, tandis que si le contrôle de la présence de l'organe fileté (V) est négatif, le procédé consiste à commander directement la mise au rebut du support (V₃),

et en ce qu'il consiste de plus, après la détection d'une rotation inférieure au premier seuil angulaire entraînant l'interruption de l'application d'un couple de vissage,

— à commander l'application sur l'organe d'entraînement (58) d'un couple de dévissage, supérieur au couple de vissage,

— à détecter la rotation effective de l'organe d'entraînement (58) dans le sens du dévissage; et,

— si la rotation détectée dans ce sens est inférieure à un troisième seuil angulaire prédéterminé, de valeur voisine ou, de préférence égale à celle du premier, ce qui témoigne du blocage de l'organe fileté sur son support, à interrompre l'application du couple de dévissage et à commander la mise au rebut du support et de son organe fileté, alors que,

— si la rotation détectée dans ce sens est supérieure au troisième seuil angulaire, le procédé consiste en outre:

— à interrompre l'application du couple de dévissage sur l'organe d'entraînement (58) et à lui appliquer à nouveau un couple de vissage, puis à détecter la rotation effective de l'organe d'entraînement dans le sens du vissage et,

— si la rotation détectée dans ce sens est inférieure au premier seuil angulaire, à commander la mise au rebut du support et de son organe fileté, alors que

— si la rotation détectée dans le sens du vissage est supérieure au premier seuil, le procédé consiste enfin à maintenir le couple de vissage jusqu'à la détection d'une vitesse de rotation nulle, ce qui témoigne de ce que l'organe fileté est serré en position vissée.

9. Procédé de contrôle selon la revendication 8, caractérisé en ce qu'il consiste à appliquer un couple de vissage et, éventuellement, de dévissage qui est constant, le couple de dévissage étant de préférence au moins égal au double du couple de vissage.

10. Procédé de contrôle selon l'une des revendications 8 ou 9, caractérisé en ce qu'il consiste à solidariser en rotation l'organe fileté (V) et l'organe d'entraînement (58) par déformation sous pression, de préférence réglable, d'un élément déformable (61) de l'organe d'entraînement qui est appliqué et serré autour d'au moins une partie de l'organe fileté, et à désolidariser l'organe fileté de l'organe d'entraînement par retour élastique en configuration non déformée de l'élément déformable (61) de l'organe d'entraînement.

11. Procédé de contrôle selon la revendication 10, caractérisé en ce qu'il consiste à désolidariser l'organe fileté (V) de l'organe d'entraînement (58) avec l'assistance d'une dépression rappelant l'élément déformable (61) de l'organe d'entraînement (58) jusqu'à sa configuration non déformée.

12. Procédé de contrôle selon l'une des revendications 8 à 11, caractérisé en ce qu'il consiste à détecter la rotation et la vitesse de rotation de l'organe d'entraînement (58) par scrutation et comptage d'impulsions produites en nombre proportionnel à la rotation effective de l'organe d'entraînement (58).

13. Procédé de contrôle selon la revendication 12, caractérisé en ce qu'il consiste, au début du cycle,

— à déclencher une première temporisation en même temps que le couple de vissage initial est appliqué,

— à détecter d'éventuelles impulsions témoignant de la mise en rotation de l'organe d'entraînement (58), puis, à la fin de cette première temporisation,

— à enregistrer s'il y a eu ou non comptage d'impulsions, c'est-à-dire s'il y a eu ou non rotation, et, parallèlement et indépendamment de la présence ou non d'une rotation,

— à prendre en compte des nombres d'impulsions de consigne, correspondants chacun à l'un des seuils prédéterminés de rotation angulaire,

— à maintenir l'application du couple de vissage, et

— à déclencher une seconde temporisation, au cours de laquelle on enregistre s'il y a comptage d'impulsion et on compare le résultat du comptage aux nombres de consigne et

— si le nombre d'impulsions comptées est compris entre les nombres de consigne des premier et second seuils, à maintenir l'application du couple de vissage, même après la fin de la seconde temporisation, et à scruter l'apparition d'impulsions pendant de courts intervalles de temps successifs afin de mesurer la vitesse de rotation, tout en comparant en permanence le nombre d'impulsions émises au nombre de consigne du second seuil, puis à commander la mise au rebut du support et de son organe fileté si le nombre de consigne du second seuil est atteint, et à détecter l'état serré et vissé de l'organe fileté en l'absence d'impulsion pendant un intervalle de scrutation, témoignant d'une vitesse nulle de rotation, tandis que

— si le nombre d'impulsions comptées est supérieur au nombre de consigne du second seuil, le procédé consiste à commander la mise au rebut du support et de son organe fileté, et que

— si le nombre d'impulsions comptées est inférieur au nombre de consigne du premier seuil, le procédé consiste, selon le cycle simplifié, à commander également la mise au rebut du support et de son organe fileté.

14. Procédé de contrôle selon la revendication 13, caractérisé en ce qu'il consiste, selon le cycle amélioré et si le nombre d'impulsions comptées est inférieur au nombre de consigne du premier seuil à la fin de la seconde temporisation,

— à enregistrer cet état,

— à appliquer le couple de dévissage et à supprimer le couple de vissage,

— à déclencher une troisième temporisation au cours de laquelle on enregistre le nombre d'impulsions reçues et on compare ce nombre au nombre de consigne du troisième seuil, de préférence égal à celui du premier seuil, puis

— à commander la mise au rebut du support et de son organe fileté, si le nombre d'impulsions comptées au dévissage est inférieur au nombre de consigne du troisième seuil à la fin de la troisième temporisation, tandis que si le nombre d'impulsions comptées au dévissage est supérieur au nombre de consigne du troisième seuil, avant la fin de la troisième temporisation, le procédé consiste de plus:

— à supprimer le couple de dévissage et à appliquer à nouveau le couple de vissage,

— à détecter l'instant du renversement du sens de rotation, et

— à déclencher à partir de cet instant, une quatrième temporisation, égale à la seconde, au cours de laquelle on enregistre les impulsions reçues, et à la fin de laquelle, on compare le nombre d'impulsions comptées au revissage aux nombres de consigne des premier et second seuils pour supprimer le couple de revissage et commander la mise au rebut du support et de son organe fileté si ce nombre d'impulsions au revissage est inférieur au nombre de consigne du premier seuil, tandis que si ce nombre d'impulsions au revissage est compris entre les nombres de consigne des premier et second seuils, on maintient le couple de revissage et on scrute à nouveau les impulsions pendant de courts intervalles de temps successifs, et

— à détecter l'état serré et vissé de l'organe fileté en l'absence d'impulsion pendant un intervalle de scrutation, avant que le nombre d'impulsions comptées au revissage n'atteigne le nombre de consigne du second seuil, alors que l'on commande la suppression du couple de revissage et la mise au rebut du support et de son organe fileté, si le nombre d'impulsions comptées au revissage atteint le nombre de consigne du second seuil.

15. Procédé de contrôle selon la revendication 14, caractérisé en ce qu'il consiste à détecter l'instant du renversement du sens de rotation entre le dévissage et le revissage en commandant, en même temps que l'application du couple de revissage, une scrutation des impulsions reçues pendant de brefs intervalles de temps successifs, et à considérer que l'instant du renversement du sens de rotation est atteint dès que le nombre d'impulsions comptées pendant un bref intervalle de temps est inférieur à un quatrième nombre de consigne, inférieur au premier et au troisième.

**Patentansprüche**

1. Prüfvorrichtung für den gesicherten und/oder abgesperrten Zustand eines Gewindeelements (V), z.B. eines drehbar an einem Träger (B₂), z.B. einer Gasflasche, befestigten Ventilrades, welches durch Anschrauben und Losschrauben zwischen zwei Extremstellungen bewegbar ist, deren eine die Schließstellung und deren andere die Öffnungsstellung bilden und die dem zugeschraubten bzw. dem aufgeschraubten Zustand des Gewindeelements (V) entsprechen, bestehend aus:

— einem Gehäuse (13),

— einer Einrichtung zum Blockieren und Zentrieren (14) des Trägers (B₁, B₂, B₃) des Gewindeelements (V), die mit dem Gehäuse so kombiniert ist, daß jeder Träger blockiert wird, um das gegebenenfalls an dem Träger angeordnete Gewindeelement (V) in einer vorbestimmten axialen Stellung (XX) gegenüber dem Gehäuse (13) zu positionieren,

— einem axial beweglich an dem Gehäuse (13) angeordneten Prüfkopf (24),

— einer Universalverbindung (60, 61) zur lösbaren Befestigung des Prüfkopfs (24) an dem Gewindeelement (V),

— einem Antriebsmotor (37) zum Antrieb des Gewindeelements (V) über die Universalverbindung (60, 61) um die Achse des Gewindeelements (V),

— einer mit der Universalverbindung (60, 61) verbundenen Einrichtungen zum Ermitteln der Rotation und der Drehzahl (47, 49) des Gewindeelements (V), und

— einem Motor (29) zum Betätigen des Prüfkopfes (24) auf dem Gehäuse (13),

dadurch gekennzeichnet, daß der Prüfkopf (24) eine Einrichtung (77, 76, 79, 80, 84, 85) zur Anzeige eines auf einem von der Blockier- und Zentriereinrichtung (14) erfaßten Träger (B₁) befindlichen Gewindeelements (V) und daß die Universalverbindung (60, 61) eine Spannbacke mit einer deformierbaren Membran (61) sowie einem rohrförmigen Ansatzstück (60) gegenüber dem Gewindeelement (V) aufweist und daß eine verformbare Membran (61) innerhalb des Ansatzstücks (60) mit diesem eine Kammer (67) von variablem Volumen begrenzt, die selektiv mit einer Druckluftquelle in Verbindung gelangt, um die Membran (61) an dem an dem Ansatzstück (60) angreifenden Teil des Gewindeelements (V) anzusetzen und zu verspannen, wenn der Prüfkopf (24) gegen den Träger (B₁) des Gewindeelements (V) verschoben worden ist, wobei die Kammer (67) von veränderlichem Volumen selektiv mit einer Unterdruckquelle in Verbindung gelangt, um die deformierbare Membran durch Unterdruck in eine das Gewindeelement (V) freigebende Position zurückzuführen.

2. Vorrichtung nach Anspruch 1, dadurch gekennzeichnet, daß der die Drehbewegung herbeiführende Antriebsmotor aus einer umkehrbaren pneumatischen Turbine (37) besteht, die selektiv mit Druckluft von zwei verschiedenen Stärken gespeist wird unter Regelung durch wenigstens einen durch zwei Elektroventile gesteuerten Verteiler (93, 94), von denen das eine Ventil (EV1) die Turbine im Drehsinn des Anschraubens des Gewindeelements (V) unter einem ersten Druck und deren anderes (EV2) die Turbine (37) im Drehsinn des Aufschraubens mit einem gegenüber dem ersten Druck erhöhten Druck steuert.

3. Vorrichtung nach Anspruch 1 oder 2, dadurch gekennzeichnet, daß die Anzeigeeinrichtung für die Drehung und die Drehzahl einen Taktgeber aufweist, der mit einem fest mit der Universalverbindung (60, 61) verbundenen Zahnrad (47) versehen ist und daß ein induktiver Meßfühler (49) gegenüber dem Zahnrad (47) auf einem undrehbaren Element (44) des Prüfkopfs (24) angeordnet ist.

4. Vorrichtung nach einem der Ansprüche 1 bis 3, dadurch gekennzeichnet, daß die das Vorhandensein eines Gewindeelements (5) auf einem Träger (B₁) anzeigende Einrichtung einen versenkbaren Fühler (77, 76) aufweist, der axial begrenzt gleitbar auf dem Prüfkopf (24) sitzt und elastisch in eine Prüfstellung zurückführbar ist, in welcher er gegen den Träger (B₁) gegenüber der Universalverbindung (60, 61) vorspringt, damit er zuerst in Kontakt mit dem gegebenenfalls an dem Träger (B₁) befindlichen Gewindeelement (V) gelangt, wenn der Prüfkopf (24) zu dem Träger bewegt wird und damit er entgegen der elastischen Rückführung (82) durch das Gewindeelement (V) zurückgeführt wird, um dessen Zusammenwirken mit dem Universalgelenk (60, 61) nicht zu behindern.

5. Vorrichtung nach Anspruch 4 in Verbindung mit Anspruch 2, dadurch gekennzeichnet, daß der versenkbare Fühler (76, 77) in einer den Boden des rohrförmigen Ansatzstücks (60) und ein den Rand (63) der verformbaren Membran (61) gegen den Boden haltendes Zwischenstück (66) axial durchsetzenden Passage gleitend gelagert ist und daß ein Ende (77) des Fühlers in Arbeitsstellung gegenüber dem Zwischenstück (66) in dem Ansatzstück (60) vorspringt, während er mit seinem gegenüberliegenden Ende axial fest an einem Kragen (81) zur Betätigung eines die Stellung angebenden Anzeigers (84, 85) anliegt, welcher an einem undrehbaren Teil (73) des Prüfkopfs (24) derart befestigt ist, daß die Betätigung des Anzeigers (84, 85) durch die Verschiebung des Fühlers (77, 76) das Vorhandensein eines Gewindeelements (V) in dem rohrförmigen Ansatzstück (60) angibt.

6. Vorrichtung nach einem der Ansprüche 1 bis 5, gekennzeichnet durch eine Anzeigeeinrichtung für den Beginn des Arbeitstaktes der Vorrichtung, die ein Unterbrecherorgan (31) und einen induktiven Fühler (32) aufweist, von denen der eine am Gehäuse (13) der Vorrichtung und der andere am Prüfkopf (24) derart angeordnet ist, daß der Fühler durch das Unterbrecherorgan abgedeckt wird und ein Signal für den Beginn des Arbeitstaktes gibt, während der Prüfkopf (24) in Richtung der Blockier- und Zentriereinrichtung (14) bewegt wird.

7. Vorrichtung nach einem der Ansprüche 1 bis 6, gekennzeichnet durch eine durch einen Mikroprozessor (88) programmierbare Einrichtung zur Aufnahme der Signale zur Anzeige der Drehung und der Drehgeschwindigkeit (49, 47) und des Anzeigers (31, 32) für den Beginn des Arbeitstaktes und die die Funktion des Motors für den Drehantrieb (37) steuert, sowie durch mindestens einen durch Positionsanzeiger (33) gesteuerten Folgeschalter, der die Funktion der Blockier- und Zentriereinrichtung (14), des Antriebsmotors (29) des Prüfkopfs (24) auf dem Gehäuse (13) und der Universalverbindung (60, 61) steuert.

8. Verfahren zum Steuern des Blockier- und/oder Absperrzustands eines Gewindeelements (V), z.B. eines drehbar an einem Träger (B₁), z.B. einer Gasflasche, befestigten Ventilrades, welches durch Anschrauben und Losschrauben zwischen zwei Extremstellungen bewegbar ist, deren eine die Schließstellung und deren andere die Öffnungsstellung bilden und die dem zugeschraubten bzw. dem aufgeschraubten Zustand des Gewindeelements entsprechen,

— wobei ein Gewindeelement (V) und ein Antriebsorgan (58) für die Drehbewegung des Gewindeelements um seine Achse (XX) positiv gemeinsam in Rotation versetzt werden,

— und dem Antriebsorgan (58) ein Anschraubmoment erteilt

— und die tatsächliche Drehung des Antriebsorgäns (58) angezeigt wird und

wenn die ermittelte Rotation oberhalb einer ersten vorbestimmten Winkelbewegung liegt, das Anschraubmoment aufrechterhalten bleibt, um den Rotationsantrieb des Gewindeelements im gleichen Sinn zu erhalten und dann zu unterbrechen, entweder bei Anzeige einer nullen Rotationsgeschwindigkeit, wenn die Anzeige vor Erreichen einer zweiten vorbestimmten Winkelbewegung erfolgt, die wesentlich über der ersten liegt, und vorzugsweise über einer maximalen Winkelbewegung zwischen den beiden Extremstellungen des Gewindeelements, was anzeigt, daß das Gewindeelement in Anschraubstellung verspannt ist,

— oder bei Anzeige der zweiten Winkelbewegung, die erkennen läßt, daß das Gewindeelement lose auf einem Träger rotiert, um dementsprechend den Träger und sein Gewindeelement als Ausschuß auszuscheiden, während, wenn die ermittelte Rotation unterhalb der ersten Winkelbewegung liegt, sich das Gewindeelement als blockiert erweist und die Anwendung des Anschraubmomentes unterbrochen wird und während eines vereinfachten Arbeitstaktes der Träger und sein Gewindeelement ausgeschieden werden, was sich nach dem Lösen und Entfernen des Antriebsorgans (58) von dem Gewindeelement (V) ergibt,

dadurch gekennzeichnet, daß zunächst durch den Fühler (77) die Anwesenheit eines Gewindeelements (V) auf einem Träger ermittelt und dann bei positiver Ermittlung die vorgesehenen Arbeitstakte durchgeführt werden, während bei negativer Anzeige der Träger (V₃) unmittelbar ausgeschieden wird,

und daß bei Anzeige einer Rotation unterhalb der die Anwendung des Anschraubmomentes unterbrechenden, ersten Stufe der Winkelbewegung, die Anwendung eines gegenüber dem Anschraubmoment größeren Aufschraubmomentes auf das Antriebsorgan (58) bewirkt wird,

— und daß die tatsächliche Rotation des Antriebsorgans (58) im Aufschraubsinne angezeigt wird, und wenn die ermittelte Rotation in diesem Sinne unterhalb einer dritten vorbestimmten Winkelbewegung liegt, deren Wert im Bereich der ersten liegt oder vorzugsweise dieser gleicht, was der Blockierung des Gewindeelements auf seinem Träger entspricht, die Anwendung des Aufschraubmomentes unterbrochen wird und der Träger und sein Gewindeelement ausgeschieden werden, während bei Anzeige einer Rotation in diesem Sinne oberhalb der dritten Winkelbewegung die Anwendung des Aufschraubmomentes auf das Antriebsorgan (58) unterbrochen und von neuem ein Zuschraubmoment aufgebracht und darauf die tatsächliche Rotation des Antriebsorgans im Sinne des Zuschraubens ermittelt wird und wenn die angezeigte Rotation in diesem Sinne unterhalb der ersten Winkelbewegung liegt, der Träger und sein Gewindeelement ausgeschieden werden, während bei einer Rotation im Anschraubsinne oberhalb der ersten Bewegung das Anschraubmoment beibehalten wird bis zur Anzeige einer Rotationsgeschwindigkeit Null, was anzeigt, daß das Gewindeelement in Anschraubstellung verspannt ist.

9. Verfahren nach Anspruch 8, dadurch gekennzeichnet, daß ein konstantes Anschraubmoment und, gegebenenfalls, Aufschraubmoment angewendet wird, wobei das Aufschraubmoment vorzugsweise mindestens gleich bis doppelt so groß ist wie das Drehmoment beim Zuschrauben.

10. Verfahren nach einem der Ansprüche 8 oder 9, dadurch gekennzeichnet, daß das Gewindeelement (V) und das Antriebsorgan (58) durch vorzugsweise regelbare Deformation unter Druck durch ein verformbares Element (61) des Antriebsorgans gemeinsam in Rotation versetzt werden, wobei dieses um mindestens einen Teil des Gewindeelements verspannt ist und daß das Gewindeelement von dem Antriebsorgan durch elastische Rückführung des verformbaren Elementes (61) des Antriebsorgans in seinen undeformierten Zustand gelöst wird.

11. Verfahren nach Anspruch 10, dadurch gekennzeichnet, daß das Gewindeelement (V) von dem Antriebsorgan (58) unter Zuhilfenahme eines Unterdrucks gelöst wird, der das deformierbare Element (61) des Antriebsorgans (58) in seinen undeformierten Zustand zurückführt.

12. Verfahren nach einem der Ansprüche 8 bis 11, dadurch gekennzeichnet, daß die Rotation und die Rotationsgeschwindigkeit des Antriebsorgans durch Abfrage und Zählung der erzeugten Impulse proportional zur tatsächlichen Rotation des Antriebsorgans ermittelt werden.

13. Verfahren nach Anspruch 12, dadurch gekennzeichnet, daß zu Beginn des Arbeitstaktes eine erste Zeitverzögerung um die gleiche Zeit, die dem ursprünglichen Zuschraubmoment entspricht, bewirkt wird, daß von der Rotation des Antriebsorgans (58) herrührende eventuelle Impulse angezeigt werden, worauf am Ende der ersten Zeitverzögerung, es ermittelt wird, ob Impulse gezählt werden oder nicht, was einer vorhandenen oder fehlenden Rotation entspricht, und zwar gleichzeitig und unabhängig von der vorhandenen oder fehlenden Rotation, daß unter Berücksichtigung der Anzahl der vorgesehenen Impulse jeder einer vorgesehenen Stufe der Winkelbewegung entspricht, daß das Zuschraubmoment aufrechterhalten wird und daß eine zweite Zeitverzögerung ausgelöst wird, während welcher eine Zählung der Impulse ermittelt und das Ergebnis mit der Anzahl der Vorgabe verglichen wird, wobei, wenn die Anzahl der ermittelten Impulse zwischen der Vorgabe der ersten und zweiten Stufe liegt, das Zuschraubmoment aufrechterhalten bleibt, selbst nach dem Ende der zweiten Zeitverzögerung, und daß das Auftreten von Impulsen in kurzen aufeinanderfolgenden Zeitintervallen zur Messung der Rotationsgeschwindigkeit überwacht wird, und zwar unter ständigem Vergleich mit der Anzahl der Impulse der Vorgabe der zweiten Stufe, worauf das Gewindeelement und sein Träger ausgeschieden werden, wenn diese Vorgabe der zweiten Stufe erreicht ist und wobei der verspannte und der verschraubte Zustand des Gewindeelementes in Abwesenheit von Impulsen während eines Überwachungsintervalls angezeigt wird, was einer Rotationsgeschwindigkeit Null entspricht, wobei das Ausscheiden des Trägers und seines Gewindeelementes erfolgen, wenn die Anzahl der gezählten Impulse über der vorgegebenen Anzahl der zweiten Stufe liegt und wobei, nach einem vereinfachten Arbeitsablauf, der Träger und sein Gewindeelement ausgeschieden werden, wenn die Anzahl der gezählten Impulse unterhalb der vorgegebenen Zahl der ersten Stufe liegen.

14. Verfahren nach Anspruch 13, dadurch gekennzeichnet, daß bei einem verbesserten Arbeitsablauf und wenn die Anzahl der gezählten Impulse unterhalb der vorgegebenen Zahl der ersten Stufe am Ende der zweiten Zeitverzögerung liegt, dieser Zustand festgehalten und das Aufschraubmoment angelegt, das Zuschraubmoment aufgehoben werden und daß eine dritte Zeitverzögerung ausgelöst wird, während welcher die Anzahl der erhaltenen Impulse ermittelt und mit der Zahl der Vorgabe der dritten Stufe verglichen wird, die vorzugsweise gleich ist derjenigen der ersten Stufe, worauf der Träger und sein Gewindeelement ausgeschieden werden, wenn die Anzahl der gezählten Impulse beim Aufschrauben unterhalb der Zahl der Vorgabe der dritten Stufe am Ende der dritten Zeitverzögerung liegt, während dann, wenn die Zahl der gezählten Impulse beim Aufschrauben über der Anzahl der Vorgabe der dritten Stufe vor dem Ende der dritten Zeitverzögerung liegt, das Aufschraubmoment abgenommen und von neuem das Anschraubmoment angewendet wird, wobei die Zeit der Umkehr des Drehsinns angezeigt und von diesem Zeitpunkt aus eine vierte, etwa der zweiten gleichende Zeitverzögerung ausgelöst wird, während welcher die erhaltenen Impulse ermittelt und an deren Ende die Anzahl der gezählten Impulse beim Aufschrauben mit der Anzahl der Vorgabe der ersten und zweiten Stufe verglichen wird, um das Aufschraubmoment auszuschalten und das Ausschalten des Trägers und seines Gewindeelementes zu bewirken, wenn die Anzahl der Impulse beim Aufschrauben unterhalb der vorgegebenen Zahl der ersten Stufe liegt, und dann, wenn die Zahl der Impulse beim Aufschrauben zwischen den vorgegebenen Zahlen der ersten und zweiten Stufe liegt, das Aufschraubmoment aufrechterhalten und von neuem die Impulse innerhalb kurzer aufeinanderfolgender Zeitintervalle ermittelt wird, worauf der verschraubte und verspannte Zustand des Gewindeelementes in Abwesenheit einer Taktgabe während eines Überwachungsintervalls erfolgt, und zwar bevor die Anzahl der gezählten Impulse beim Aufschrauben die Anzahl der Vorgabe der zweiten Stufe erreicht, worauf das Zuschraubmoment abgenommen und der Träger und sein Gewindeelement ausgeschieden wird, wenn die Anzahl der ermittelten Impulse beim Aufschrauben die Anzahl der Vorgabe der zweiten Stufe erreicht.

15. Verfahren nach Anspruch 14, dadurch gekennzeichnet, daß im Moment der Umkehr der Drehrichtung zwischen dem Aufschrauben und dem Zuschrauben gleichzeitig mit dem Anlegen des Aufschraubmomentes eine Ermittlung der Impulse während kurzer aufeinanderfolgender Intervalle erfolgt und daß die Umkehr der Drehrichtung erfolgt, sobald die Anzahl der ermittelten Impulse während eines kurzen Zeitraums unterhalb einer vierten vorgegebenen Zahl unterhalb der ersten und dritten Zahl liegt.

## Claims

1. Machine for checking the locked and/or tightened state of a threaded member (V), such as a valve handwheel, mounted rotatably on a support (B₂), such as a gas bottle, and movable by screwing and unscrewing between two end positions, of which one is a closing position and the other an opening position and which correspond respectively to the screwed state and to the unscrewed state of the threaded member (V), the machine comprising:
  — a stand (13),
  — a locking and centring device (14) for the support (B₁, B₂, B₃) of threaded member (V), this said device being associated with the stand (13) in order to lock any support in such a way as to position the threaded member (V), possibly equipping the support,
  in a predetermined axial position (XX) in relation to the stand (13),
  — a monitoring head (24) mounted movably on the stand (13) in terms of axial translational motion,
  — a universal connection device (60, 61) allowing the monitoring head (24) to be fixed removably to the said threaded member (V),
  — a driving motor member (37) which drives the said threaded member (V) about the axis of the said threaded member (V) by means of the universal connection device (60, 61),
  — a device (47, 49) for detecting the rotation and rotational speed of the said threaded member (V), the said detection device being connected to the said universal connection device (60, 61), and
  — a motor member (29) for actuating the monitoring head (24) on the stand (13),
  characterized in that the said monitoring head (24) comprises a device (77, 76, 79, 80, 84, 85) for detecting the presence of a threaded member (V) on a support (B₁) locked in the locking and centring device (14), and in that the said universal connection device (60, 61) comprises a deformable-diaphragm jaw (61) having a tubular socket (60) for engagement on the threaded member (V), and a deformable diaphragm (61) retained in the socket (60) and delimiting with the latter a variable-volume chamber (67) put selectively in communication with a compressed-air source, in order to lay and clamp the diaphragm (61) round that part of the threaded member (V) engaged in the tubular socket (60), when the monitoring head (24) has been moved in translational motion towards the support (B₁) of the threaded member (V), the said variable-volume chamber (67) being put selectively in communication with a vacuum source, in order to return the deformable diaphragm (61) by suction into a position of releasing the threaded member (V).

2. Machine according to Claim 1, characterized in that the said motor member for driving in rotation is a reversible air turbine (37) fed selectively with compressed air at two pressure levels adjustable by means of at least one power distributor (93, 94) controlled by two solenoid valves, one (EV1) of which controls the rotation of the turbine (37) in the direction of screwing of the threaded member (V) at a first feed-pressure level and the other (EV2) of which controls the rotation of the turbine (37) in the unscrewing direction at a second pressure level higher than the first.

3. Machine according to either one of Claims 1 or 2, characterized in that the said device for detecting the rotation and rotational speed comprises a pulse generator having a gearwheel (47) integral in terms of rotation with the universal connection device (60, 61), and an inductive sensor (49) mounted opposite the gearwheel (47) on a non-rotary element (44) of the monitoring head (24).

4. Machine according to one of Claims 1 to 3, characterized in that the said device for detecting the presence of a threaded member (V) on a support (B₁) comprises a retractable feeler (77, 76) mounted axially slideably with a limited stroke on the said monitoring head (24) and returned elastically into a feeling position, in which it projects towards the said support (B₁) in relation to the universal connection device (60, 61), in order to be the first to come in contact with the threaded member (V), with which the said support (B₁) is possibly equipped, when the monitoring head (24) is shifted towards the said support and to be pushed back counter to elastic return means (82) by the threaded member, so as not to impede the interaction of the latter with the universal connection device (60, 61).

5. Machine according to Claim 4, in conjunction with Claim 2, characterized in that the retractable feeler (77, 76) is mounted slideably in an axial passage extending through the bottom of the tubular socket (60) and a wedge (66) for retaining one edge (63) of the deformable diaphragm (61) against the said bottom, the feeler having one end (77) which, in the feeling position, projects relative to the said wedge (66) into the tubular socket (60), whilst, at its opposite end, it is integral in terms of axial translational motion with a collar (81) for actuating a position detector (84, 85) mounted on a non-rotary piece (73) of the monitoring head (24), in such a way that the actuation of the said position detector (84, 85) as a result of the translational motion of the feeler (77, 76) signals the presence of a threaded member (V) in the tubular socket (60).

6. Machine according to one of Claims 1 to 5, characterized in that it possesses a detector of the start of the operating cycle of the machine, this detector comprising a masking member (31) and an inductive sensor (32) which are arranged one on the stand (13) of the machine and the other on the monitoring head (24), in such a way that the sensor is masked by the masking member and emits a start-of-cycle signal when the monitoring head (24) is shifted towards the locking and centring device (14).

7. Machine according to one of Claims 1 to 6, characterized in that it possesses a programmable micro-processor unit (88) which receives signals from the device (49, 47) for detecting the rotation and rotational speed and from the start-of-cycle detector (31, 32) and which commands the functioning of the motor member for driving in rotation (37), and at least one sequencer which is controlled by position detectors (33) and which commands the functioning of the locking and centring device (14) of the motor member (29) for actuating the monitoring head (24) on the stand (13) and of the universal connection device (60, 61).

8. Process for checking the locked and/or tightened state of a threaded member (V), such as a valve hand-wheel, mounted rotatably on a support (B₁), such as a gas bottle, and movable by screwing and unscrewing between two end positions, of which one is a closing position and the other an opening position and which correspond respectively to the screwed state and to the unscrewed state of the threaded member (V), involving:

— fixing to one another substantially positively in terms of rotation the threaded member (V) and a member (58) for driving the threaded member in rotation about its axis (XX),

— commanding the exertion of a screwing torque on the driving member (58),

— detecting (47, 49) the effective rotation of the driving member (58), and

— if the detected rotation is higher than a first predetermined angular threshold, maintaining the exertion of a screwing torque in order to continue the driving of the threaded member in rotation in the same direction, then interrupting it,

either at the detection of a zero rotational speed, if this detection is obtained before reaching a second predetermined angular threshold much higher than the first and preferably than the maximum angular stroke between the two end positions of the threaded member, thus signalling that the threaded member is tightened in the screwed position,

or at the detection of the second angular threshold, thus signalling that the threaded member rotates loosely on a support, and consequently commanding the rejection of the support and of its threaded member, whilst:

if the detected rotation is lower than the first angular threshold, the threaded member is considered to be locked, and the process involves interrupting the exertion of the screwing torque and, according to a simplified cycle, commanding the rejection of the support and of its threaded member, this occurring after the driving member (58) has been disconnected from and moved away from the threaded member (V),

characterized in that it involves initially checking the presence of a threaded member (V) on a support by contact (77) and then, if the check of the presence of the threaded member is positive, carrying out the preceding operations, whilst, if the check of the presence of the threaded member (V) is negative, the process involves commanding the rejection of the support (V₃) directly,

and in that it involves, furthermore, after the detection of a rotation below the first angular threshold causing the interruption in the exertion of a screwing torque,

— commanding the exertion of an unscrewing torque higher than the screwing torque on the driving member (58),

— detecting the effective rotation of the driving member (58) in the unscrewing direction, and

— if the rotation detected in this direction is below a third predetermined angular threshold of a value in the neighbourhood of or preferably equal to that of the first, thus signalling the locking of the threaded member on its support, interrupting the exertion of the unscrewing torque and commanding the rejection of the support and of its threaded member, whilst,

— if the rotation detected in this direction is higher than the third angular threshold, the process also involves:

— interrupting the exertion of the unscrewing torque on the driving member (58) and exerting a screwing torque on it once again and then detecting the effective rotation of the driving member in the screwing direction, and,

— if the rotation detected in this direction is below the first angular threshold, commanding the rejection of the support and of its threaded member, whilst,

— if the rotation detected in the screwing direction is higher than the first threshold, the process finally involves maintaining the screwing torque until a zero rotational speed is detected, thus signalling that the threaded member is tightened in the screwed position.

9. Checking process according to Claim 8, characterized in that it involves exerting a screwing and, if appropriate, unscrewing torque which is constant, the unscrewing torque preferably being at least equal to double the screwing torque.

10. Checking process according to one of Claims 8 or 9, characterized in that it involves fixing the threaded member (V) and the driving member (58) to one another in terms of rotation as a result of the deformation under preferably adjustable pressure of a deformable element (61) of the driving member which is laid and clamped round at least part of the threaded member, and disconnecting the threaded member from the driving member as a result of the elastic return of the deformable element (61) of the driving member into its non-deformed state.

11. Checking process according to Claim 10, characterized in that it involves disconnecting the threaded member (V) from the driving member (58) with the assistance of a vacuum which returns the deformable element (61) of the driving member (58) into its non-deformed state.

12. Checking process according to one of Claims 8 to 11, characterized in that it involves detecting the rotation and rotational speed of the driving member (58) by the scrutiny and counting of pulses generated in a number proportional to the effective rotation of the driving member (58).

13. Checking process according to Claim 12, characterized in that it involves, at the start of the cycle,

— triggering a first delay at the same time as the initial screwing torque is exerted,

— detecting possible pulses signalling the setting in rotation of the driving member (58), then, at the end of this first delay,

— recording whether there has been a counting of pulses or not, that is to say whether there has been rotation or not, and, in parallel and independently of the presence of rotation or not,

— taking into account nominal numbers of pulses, each corresponding to one of the predetermined angular rotation thresholds,

— maintaining the exertion of the screwing torque, and

— triggering a second delay, during which it is recorded whether there is a counting of pulses and the result of the count is compared with the nominal numbers, and

— if the number of pulses counted is between the nominal numbers of the first and second thresholds, maintaining the exertion of the screwing torque, even after the end of the second delay, and scrutinizing the incidence of pulses during brief successive time intervals, in order to measure the rotational speed, whilst at the same time continuously comparing the number of pulses emitted with the nominal number of the second threshold, then commanding the rejection of the support and of its threaded member if the nominal number of the second threshold is reached, and detecting the tightened and screwed state of the threaded member in the absence of a pulse during a scrutiny interval, signalling a zero rotational speed, whilst

— if the number of pulses counted is higher than the nominal number of the second threshold, the process involves commanding the rejection of the support and of its threaded member, and,

— if the number of pulses counted is below the nominal number of the first threshold, the process involves, according to the simplified cycle, likewise commanding rejection of the support and of its threaded member.

14. Checking process according to Claim 13, characterized in that it involves, according to the improved cycle and if the number of pulses counted is below the nominal number of the first threshold at the end of the second delay,

— recording this state,

— exerting the unscrewing torque and cancelling the screwing torque,

— triggering a third delay, during which the number of pulses received is recorded and this number is compared with the nominal number of the third threshold, preferably equal to that of the first threshold, then

— commanding the rejection of the support and of its threaded member, if the number of pulses counted during unscrewing is below the nominal number of the third threshold at the end of the third delay, whilst, if the number of pulses counted during unscrewing is higher than the nominal number of the third threshold before the end of the third delay, the process further involves,

— cancelling the unscrewing torque and exerting the screwing torque once again,

— detecting the moment of reversal of the direction of rotation, and

— from this moment, triggering a fourth delay, equal to the second, during which the pulses received are recorded and at the end of which the number of pulses counted during rescrewing is compared with the nominal numbers of the first and second thresholds, in order to cancel the rescrewing torque and command the rejection of the support and of its threaded member, if this number of pulses during rescrewing is below the nominal number of the first threshold, whilst, if this number of pulses during rescrewing is between the nominal numbers of the first and second thresholds, the rescrewing torque is maintained and the pulses are scrutinized once again during brief successive time intervals, and

— detecting the tightened and screwed state of the threaded member in the absence of a pulse during a scrutiny interval, before the number of pulses counted during rescrewing reaches the nominal number of the second threshold, whilst the cancellation of the rescrewing torque and the rejection of the support and of its threaded member are commanded if the number of pulses counted during rescrewing reaches the nominal number of the second threshold.

15. Checking process according to Claim 14, characterized in that it involves detecting the moment of reversal of the direction of rotation between unscrewing and rescrewing by commanding, at the same time as the exertion of the rescrewing torque, a scrutiny of the received pulses during brief successive time intervals, and considering that the moment of reversal of the direction of rotation is reached as soon as the number of pulses counted during a brief time interval is below a fourth nominal number less than the first and third.

20

FIG.1

FIG.2

FIG.3

FIG.4

FIG.5

FIG.6

EV1 VISSAGE

EV2 DEVISSAGE

EV3 FIN DE

CYCLE

EV4

61, 29, 22

BOUTEILLES DEFECTUEUSES

37

D

MISE SOUS TENSION — 98

INITIALISATION — 99

NON ◁ DESCENTE TETE
DE VISSAGE ▷ — 100

OUI

AFFICHAGE — 101

LANCEMENT DE LA
TEMPORISATION — 102

◁ TURBINE EN
MOUVEMENT ▷ — 103

OUI

NON

NON ◁ FIN DE
TEMPORISATION ▷ — 104

OUI

ACQUISITION DES CONSIGNES
ROUES CODEUSES — 105

MISE EN ROTATION TURBINE
SENS FERMETURE DU
ROBINET — 106 → EV1

107

FIG.7a

FIG.7b